# EUROPEAN PATENT APPLICATION

(11) **EP 4 574 665 A1**
(43) Date of publication of application: **25.06.2025**
(21) Application number: 24221585.3
(22) Date of filing: 19.12.2024
(51) Int. Cl.: B64D 27/355, B64D 33/04, B64D 37/30, B64D 41/00

(54) **ENERGY CONVERSION ARRANGEMENT, ENERGY SYSTEM, PROPULSION UNIT, AND AIRCRAFT COMPRISING SAME**

(30) Priority: 21.12.2023 EP 23290048; 21.12.2023 EP 23290049; 21.12.2023 EP 23290052; 21.12.2023 EP 23290050; 21.12.2023 EP 23290051; 07.08.2024 DE 102024122543
(71) Applicant: AIRBUS Operations GmbH, 21129 Hamburg (DE)
(72) Inventor: WITTMANN, Tim, 21129 Hamburg (DE); PEREZ RODRIGUEZ, Javier, 21129 Hamburg (DE)
(74) Representative: LKGLOBAL Lorenz & Kopf Patentanwalt Attorney at Law PartG mbB

(57) **Abstract**

An energy conversion arrangement (10) for an aircraft (1), an energy system (2), a propulsion unit (5), and an aircraft (1) comprising an energy conversion arrangement (10) and/or an energy system (2) are provided, wherein the energy conversion arrangement (10) comprises at least one exhaust outlet (13) for letting out exhausts (E) produced by a fuel conversion device (11), in particular a fuel cell system (70), for converting at least one fuel to electrical and/or mechanical energy in the fuel conversion device (11); and at least one exhaust assembly (400) configured to admix a stream of the exhausts (E) from the at least one exhaust outlet (13) with ambient air (A) from the ambient surroundings (7) in at least one mixing zone (406) to promote a growth of water droplets through at least partly condensing water vapor contained in the exhausts (E) in the mixing zone (406).

## Description

### Technical Field

The present disclosure relates to the field of anthropogenic climate change due to cloudiness caused by contrails produced by energy systems of aircrafts. In particular, the disclosure relates to an energy conversion arrangement for an aircraft, an energy system, in particular for powering a propulsion unit for propelling an aircraft, to a propulsion unit, and to an aircraft comprising an energy conversion arrangement, an energy system and/or a propulsion unit.

### Technical Background

Conventional aircraft engines emit water vapor and soot particles. The plume of the conventional engine mixes with ambient air and the temperature decreases. This leads to a water vapor supersaturation and subsequent droplet formation on the soot particles. These droplets freeze and hence form contrails. In ice-supersaturated regions (ISSR), contrails persist for a long time and contribute to global warming.

For several reasons, hydrogen powered fuel cell aircraft are an interesting alternative to conventional aircraft propulsion and also for power generation, in that they may replace conventional auxiliary power units (APUs). In particular, they emit no carbon dioxide and thus are seen as a potential pathway to a more sustainable aviation. However, they emit large amounts of water. If this water is able to form persistent contrails, it contributes to global warming.

Fuel cells emit no soot particles. Due to the low concentration of ambient aerosols, only a few droplets can form through heterogeneous nucleation. Instead, most droplets form through homogeneous nucleation during which molecules condensate and form nuclei without the presence of foreign ions or particles. Homogeneous nucleation can occur inside the fuel cell system, e.g., in a turbine or a nozzle, or in the plume during mixing and cooling with ambient air. The occurrence and place of homogeneous nucleation depends on the system architecture, operating conditions and ambient conditions. Homogeneous nucleation leads to a high concentration of small droplet radii, often below one micron. If the droplets freeze to persistent ice crystals, the resulting contrail might have a stronger climate impact than a contrail of a conventional aircraft engine. Therefore, it is important to reduce the contrail formation of fuel cell aircraft as much as possible or avoid it altogether.

EP 3 961 012 A1, for example, relates to an aircraft flight contrail assessment device comprising a contrail sensor adapted to produce contrails data representative of an atmosphere parameter having an influence on the formation of contrails or an observation parameter varying depending on at least the presence of one or more contrails, and a processing unit adapted to calculate at least a contrails value representative of an amount of contrail, based on said contrails data. The invention provides such device as well a corresponding method to evaluate the amount of contrails produced by an aircraft during a flight.

US 11 579 050 B2 relates to a system, configured for being on board an aircraft. The system includes a probe for collecting samples of contrail, a chamber for collecting the samples, a collecting conduit for conducting the samples from the collecting probe the collecting chamber and at least one device for measuring at least one parameter characterizing the samples in the collecting conduit while they are conducted from the collecting probe to the collecting chamber. By virtue of the system, it is not necessary to use a second aircraft that follows the aircraft for collecting samples of contrail.

US 5 005 355 A describes a method of suppressing the formation of contrails from the exhaust of an engine operating in cold temperatures including the steps of providing a combined nucleating agent and freeze-point depressant selected from the group of water soluble monohydric, dihydric, trihydric or other polyhydric alcohols, or mixtures thereof, forming the solution into a vapor, and injecting the solution into the exhaust of the engine. The solution may include a non-corrosive surfactant. Another solution may include an organic or an inorganic nucleating agent, or mixtures thereof, in monohydric, dihydric, or polyhydric alcohols, or mixtures thereof, and in addition may contain one or more surfactants.

EP 2 150 692 A2 describes an aircraft comprising a gas turbine engine that exhausts a plume of gases in use, the aircraft comprises an ultrasound generator having an ultrasonic actuator and a waveguide to direct ultrasonic waves at the exhaust plume to avoid the formation of contrails.

EP 2 153 043 A2 describes a method of operating an aircraft, and the aircraft itself, comprising a gas turbine engine that exhausts a plume of gases in use, the aircraft is characterised by comprising an electromagnetic radiation generator and a waveguide to direct electromagnetic radiation at the exhaust plume to avoid the formation of contrails.

US 7 971 438 B2 deals with the provision of a condensation stage in a heat exchanger arrangement for a gas turbine engine wherein the level of condensation within a final exhaust gas flow from an engine is reduced. Furthermore, by cooling of the exhaust gas flows for mixing with by-pass air flows a water partial pressure at an exhaust gas exit temperature can be provided which is below the eutectic liquid to vapor phase transition and therefore avoid condensation (contrail) formation.

H. Cruz Champion, S. Kabelac, "Multifunctional fuel cell system for civil aircraft: Study of the cathode exhaust gas dehumidification", International Journal of Hydrogen Energy, Volume 42, Issue 49, 2017, Pages 29518-29531, ISSN 0360-3199, (https://doi.org/10.1016/j.ijhydene.2017.09.175) describe a cathode exhaust gas dehumidification system based on an air cycle machine (compressor, heat exchanger, cyclone, turbine) which supplies liquid water and dry oxygen depleted air (ODA).

Systems and methods for reducing contrails, as known from the prior art, do not satisfy all requirements for contrail reduction on aircrafts. The known systems require additional installation, space, weight, and power offtake. Moreover, the known systems cannot necessarily be applied to alternative fuel conversion technologies, such as fuel cells.

### Summary

It may thus be seen as an object to reduce climate impacts of aviation operations due to contrail formation. In other words, it can be seen as an object, to provide a contrail reduction or at least negative effects of contrails, preferably also for any contrails produced by alternative fuel conversion technologies, such as fuel cells. These objects are at least partly achieved by the subject-matter of the independent claims.

In particular, an energy conversion arrangement for an aircraft is provided, comprising at least one exhaust outlet for letting out exhausts produced by a fuel conversion device, in particular a fuel cell system, for converting at least one fuel to electrical and/or mechanical energy in the fuel conversion device; and at least one exhaust assembly configured to admix a stream of the exhausts from the at least one exhaust outlet with ambient air from the ambient surroundings in at least one mixing zone to promote a growth of water droplets through at least partly condensing water vapor contained in the exhausts in the mixing zone.

According to an aspect, an energy system, in particular for powering a propulsion unit for propelling an aircraft, is provided, comprising a corresponding energy conversion arrangement. The energy system may comprise the propulsion unit. The energy system may be provided as an engine and/or power plant for an aircraft.

According to an aspect, a propulsion unit for propelling an aircraft is provided, the propulsion unit comprising a corresponding energy conversion arrangement and/or a corresponding energy system.

According to an aspect, an aircraft is provided comprising a corresponding energy conversion arrangement, a corresponding energy system, and/or a corresponding propulsion unit.

The at least one exhaust assembly can be arranged at the at least one exhaust outlet. The exhausts from the exhaust outlet can be directly led into or along the exhaust assembly. This helps in providing a simple, yet reliable and efficient way to establish the mixing zone for contrail reduction right at the exhaust outlet without the need for further major system components which in turn would lead to increased weight and complexity.

For example, the at least one exhaust outlet can be configured as a part of the at least one exhaust assembly. Alternatively, or additionally, the at least one exhaust assembly can be a part of the exhaust outlet. Thereby, the energy conversion arrangement, in particular the exhaust assembly, can be designed to provide the mixing zone in a compact and lightweight manner.

The mixing zone enables to increase a dwell time of exhausts at the first contact point between the internal warm, moist exhaust flow and the cold and dry ambient air. This contact point is of high relevance for droplet formation, as the flow with high content of water suffers a sudden decrease in its temperature triggering homogeneous nucleation and, thus, creating a large number of droplets. The droplets formed in this area are numerous and do not grow very large compared to the ones formed further downstream, due to the fact that the condensed water is distributed over an increased number of droplets.

The solution has the advantage of shifting the droplet spectrum towards fewer and larger droplets by removing the small ones through their growth in the mixing zone. This is beneficial, since removing the small droplets is necessary for decreasing the severeness of the contrails to be formed. Compared to the case where the solution is not applied, fewer and larger droplets are provided downstream of the mixing zone in the atmosphere, which is beneficial for reducing contrail severeness.

The proposed solution provides a reduction of contrail formation for all kinds of aircraft, including but not limited to fuel cell aircraft. This includes energy systems for aircrafts comprising fuel cells for aircraft propulsion and/or as APUs. Compared to the prior art, the proposed solution is lighter, cheaper, uses less space and power and creates no new emissions. The proposed solution allows for mitigating a possible disadvantage of fuel cell powered aircrafts by reducing their contribution to contrail production, and thus enhancing their environmental friendliness.

Further developments can be derived from the dependent claims and from the following description. Features described with reference to devices and arrangements may be implemented as method steps, or vice versa. Therefore, the description provided in the context of the energy conversion arrangement, energy system and/or aircraft applies in an analogous manner also to respective methods. In particular, the functions of the energy conversion arrangement, energy system and/or aircraft and of their or its, respectively, components may be implemented as method steps of the methods and the method steps may be implemented as functions of the energy conversion arrangement, energy system and/or aircraft.

According to an embodiment, the mixing zone is configured to gradually admix the exhausts to the ambient air. Gradually admixing the exhausts to the ambient air enables to increase the dwell time of any droplets in the mixing zone, and thus promotes droplet growth. This further helps in avoiding or at least limiting contrail formation as well as unwanted contrail impacts

According to an embodiment, the mixing zone comprises a pre-mixing zone and a main mixing zone, wherein at least one exhaust tapping passage of the exhaust assembly leads a branched-off flow of exhausts to a pre-mixing zone and a main passage of the exhaust arrangement leads a main flow of exhausts to the main mixing zone. In the pre-mixing zone, a small portion of the warm, moist flow of exhaust can be mixed with the cold and dry ambient air. This leads to the formation of initially relatively small droplets after the pre-mixing zone. These droplets can then be transported into the main mixing zone where a relatively large remaining portion of the warm, moist flow of exhausts mixes with the cold and dry ambient air. There, the earlier formed relatively small droplets can provide a phase boundary on which condensation will take place. The condensation and associated release of latent heat can reduce a subcooling of the water vapor contained in the exhausts. Hence, a nucleation rate of new droplets in the main mixing zone is much smaller than without the pre-mixing zone. Overall, the resulting droplet spectrum consists of fewer, larger droplets. This can help to further reduce unwanted contrail impacts.

According to an embodiment, the tapping passage is formed as a side channel within a wall portion of the exhaust assembly at least sectionwise separating the exhausts from the ambient air and/or between a sleeve and an inner wall section of the main passage. Thereby, a relatively small portion of the flow of exhausts can be branched-off from a main flow of exhausts and led to the ambient via the side channel, for example, a relatively small duct, orifice, or alike. When the relatively small exhaust flow portion gets into contact with the ambient flow, a pre-mixing zone is being established and droplets form through nucleation. The droplets can then be transported towards the main mixing zone where they reduce the subcooling through condensation. This can again help to further reduce unwanted contrail impacts.

According to an embodiment, the exhaust assembly is configured to promote formation of an exhaust vortex of exhausts recirculating in the mixing zone. Creating a recirculation region allows a number of recently created droplets to increase their residence time due to the immersion in the recirculation zone, hence resulting in further time in supersaturated flow where droplet growth happens. This results in a reduced number of small droplets compared to the non-recirculation case, which is beneficial for avoiding contrail formation or at least for the reduction of unwanted contrail impacts.

According to an embodiment, the exhaust assembly is configured to promote formation of an air vortex of ambient air recirculating in the mixing zone. A deliberate flow stall may be promoted in the mixing zone. The ambient air may thereby be sucked into the mixing zone and recirculate in the vortex. This further helps in reducing the number of small droplets compared to the non-recirculation case, which is beneficial for avoiding contrail formation or at least for the reduction of unwanted contrail impacts.

According to an embodiment, the exhaust vortex and air vortex contact each other in a recirculation region of the mixing zone. The recirculation region may be defined by the extension of the parts of the exhaust vortex and the air vortex recirculating. The dwell time of droplets in the mixing zone may be increased by this recirculation for gradual temperature and relative moisture adjustment between the exhausts on the one hand, and the ambient air on the other hand. This additionally helps in reducing the number of small droplets compared to the non-recirculation case, which is beneficial for avoiding control formation or at least for the reduction of unwanted contrail impacts.

According to an embodiment, the exhaust assembly comprises a lip providing at least one trailing edge configured to create the mixing zone. The trailing edge can be formed at and/or provided by the lip. The lip and thus the at least one trailing edge can be configured such that formation of the mixing zone, in particular of the recirculation region, is enhanced. The lip thereby helps in reducing the number of small droplets compared to the non-recirculation case, which is beneficial for avoiding control formation or at least for the reduction of unwanted contrail impacts.

According to an embodiment, a ratio of a lip height of the lip to an outlet height of the exhaust outlet exceeds a value of 0.05, preferably 0.06, most preferably 0.07. For example, a minimal lip height of the lip can amount to approx. 5 mm. An outlet height of the exhaust outlet may amount to between 50 to 90 mm, preferably 60 to 80 mm, most preferably to around 70 mm. Thereby, a balance between potential drag introduced by the lip on the one hand, and the advantages of contrail avoidance or at least reduction of unwanted contrail impacts on the other hand, can be provided.

According to an embodiment, the exhaust assembly comprises a spoiler device configured to at least partly provide the lip. The spoiler device can comprise a spoiler element configured to provide the lip, configured to promote a flow stall at at least one trailing edge, and/or configured to promote a recirculation of exhausts and/or ambient air in the mixing zone. The spoiler element can be configured to be movable between a stowed position providing a minimized lip height and/or spoiling effect with regard to the respective flow, and a deployed position providing a maximized lip height and/or spoiling effect for adjusting exhaust and/or air flow in the mixing zone.

For example, the spoiler element can least sectionwise be formed as a spoiler flap, guiding surface and/or guide vane which can be moved and/or deflected between the stowed position and the deployed position. In at least one position, preferably the deployed position, the spoiler element can be inclined under an acute angle with respect to an outer wall and/or a channel wall for guiding the ambient air and/or the exhausts towards the mixing assembly, respectively. This further helps in finding a balance between potential drag introduced by the lip on the one hand, and the advantages of contrail avoidance or at least reduction of unwanted contrail impacts on the other hand, for example, in that the spoiler element may only be deployed in case of a potential contrail formation.

A vertical height of the mixing zone can depend on the height of the lip and/or the spoiler device. In other words, the height of the mixing zone may be defined by a lip height and/or spoiler height. For example, a ratio of a lip height to the mixing height may amount to or less than 2. The mixing height may amount to 3 to 7 mm, preferably 4 to 6 mm, most preferably around 5 mm.

According to an embodiment, the exhaust assembly comprises a concave lip section providing a cavity at least partly providing the mixing zone. Due to the cavity, two relatively sharp trailing edges can be provided for the exhausts and the ambient air, respectively. These relatively sharp trailing edges may help to create respective flow stalls. The cavity may help to further promote formation of the mixing zone, in particular formation of the recirculation region. Thereby, the lip height and thus, weight and drag of the exhaust assembly may be reduced.

According to an embodiment, an outlet passage leading to the exhaust outlet is configured to provide an outflow direction extending essentially in parallel or at least under an acute angle with respect to a flow direction of ambient air. The outlet passage can be configured to prevent that flows of the ambient air and the exhausts converge in the mixing zone. Therefore, the outlet passage can have a certain passage length enabling an undisturbed attached flow adhering to the outlet passage.

For example, the outlet passage can have a length of at least between 80 to 120 mm, preferably at least between 90 to 110 mm, most preferably around 100 mm. The outlet passage can be configured to create an essentially homogenous laminar flow and therefore may extend essentially in a straight fashion along its passage length to promote formation of a relatively stable exhaust vortex. This further helps in establishing the mixing zone, in particular the recirculation region.

According to an alternative, or additional solution, an energy conversion arrangement for an aircraft is provided, comprising a fuel conversion device, in particular a fuel cell system, for converting at least one fuel to electrical and/or mechanical energy; an exhaust outlet for letting out exhausts produced in the fuel conversion device by the fuel conversion; and at least one water separator arranged in a flow path of exhausts produced in the fuel conversion device and configured for separating water from products of the fuel conversion device on their way from the fuel conversion device to the exhaust outlet; wherein the at least one water separator comprises permeable membrane and/or absorbent material.

For this solution, two components of a fuel cell system of an aircraft can be mainly considered, namely, the fuel conversion arrangement, e.g., a fuel cell system, and the air supply system. The fuel cell system itself converts oxygen and hydrogen to water, which provides electricity, water, and waste heat. The air supply provides ambient air including oxygen to the fuel cell and discharges the remaining air including the water.

According to the present solution, the water separator can be used. The water separator can comprise water separating materials, placed in the exhaust path of the air supply system, to withdraw liquid and gaseous water from the exhaust flow. The water withdrawal leads to a reduced humidity of the air supply exhaust flow and hence to a lower risk for contrail formation. For the dehumidification process, water can be discharged in the gaseous and/or liquid form. The exhausts may pass through the water separator in a cross flow with respect to the separated water. The permeable membrane and/or absorbent material can be particularly permeable for water molecules.

The present solution has the advantage that it allows for a reduced humidity output since the humidifier can reduce an amount of water, e.g., water drops, which could form after the fuel conversion in the exhausts. As soon as such waterdrops are released as exhausts to a colder environment, contrails could occur. Thus, the solution provides a simple way of reducing unwanted contrail impacts, while enabling to support an efficient operation of the energy conversion arrangement.

According to an embodiment, the wherein the at least one water separator is configured to dehumidify the exhausts. Hence, the content of water vapour in the exhausts may be reduced as they pass the water separator. This can particularly help to reduce the contents of gaseous water in the exhausts and thus the risk of their condensation at a later stage within the energy conversion arrangement and/or after releasing the exhausts into the atmosphere, where they may lead to unwanted contrails.

According to an embodiment, the permeable membrane and/or absorbent material at least sectionwise have or has, respectively, molecule size selective properties. The molecule size selective properties can allow for a molecular diffusion of water from the water within the separator. Such a molecular diffusion can involve surface diffusion, Knudsen diffusion and/or molecular sieving effects. For example, the permeable membrane and/or absorbent material comprises Nation^{®}. This allows for a simple construction as well as an efficient operation of the at least one water separator.

According to an embodiment, the energy conversion arrangement further comprises a heating device arranged in the flow path of the exhausts after the at least one water separator. The heating device provides a heat source between the water separator and the exhaust outlet of the aircraft. The heating reduces the saturation, i.e., relative humidity, of the exhaust gas flow. A lower saturation reduces or altogether prevents droplet formation and condensation in the exhaust system. Droplet formation might still occur in the plume of the propulsion system. However, a likelihood of the formation of a large number of small droplets is reduced. This decreases the risk of contrail formation, in particular in that water can already have been a withdrawn from the exhausts in the water separator before reaching the heating device.

According to an embodiment, the energy conversion arrangement further comprises at least one mixing assembly arranged in the flow path after the water separator and configured to mix the exhausts with further exhausts from the energy conversion arrangement. Waste heat of a fuel cell aircraft system can be used in the mixing assembly to avoid a high supersaturation in the plume of the discharged humid exhaust flow of fuel conversion device, e.g., a fuel cell system. This can be achieved by mixing the humid exhaust flow of the air supply system with a warm and dry gas flow before it can mix with the cold ambient air. Thereby, a maximum supersaturation in the plume and hence the number of droplets formed therein may be reduced. A decreased number of droplets reduces an amount of possible ice crystal formation and hence reduces contrail impact. In principle, a corresponding solution may utilise any heat source for providing the further exhausts.

According to an embodiment, the energy conversion arrangement further comprises an expansion device arranged in the flow path of the exhausts and configured to decompress the exhausts; wherein the at least one water separator is arranged in the flow path before the expansion device, after the expansion device and/or in at least one bypass duct configured to allow the exhausts to bypass the expansion device on their way from the fuel conversion device to the exhaust outlet.

In a typical air supply system of a fuel conversion device, such as a fuel cell, ambient air is compressed and fed to the fuel conversion device. After the fuel conversion device, the now humid air is typically expanded in an expansion device, such as a turbine, and then emitted back to the ambient. The bypass duct can connect to any duct defining the flow path and/or any kind of source of the exhausts upstream of the expansion device and thus enable relatively humid exhausts from the fuel conversion device, such as air from a fuel cell, to partially, or completely bypass the expansion device, such as a turbine. Hence no or at least far less enthalpy is withdrawn from the fluid exhausts in comparison to if they are being decompressed in the expansion device.

A certain expansion in the bypass, e.g., in a valve or nozzle, may be inevitable, such that some droplets might form. This is due to the high saturation caused by the low static temperature which is a result of the high flow velocities during expansion. Consequently, the droplets will partly or completely evaporate when the flow is decelerated. However, when the flow of exhausts is decelerated, the static temperature rises again, as the total temperature remains unchanged. This will lead to a partial or complete evaporation of the droplets formed in the bypass. Hence, fewer droplets are emitted, and the contrail contribution of the energy conversion arrangement is reduced. Contrary to that, when being decompressed in the expansion device, for example, a turbine, the droplets might not evaporate, as the expansion device withdraws enthalpy and hence reduces the total temperature of the flow.

The solution particularly allows for bypassing the expansion device during flight through ISSR where persistent contrails can form. In this way, no enthalpy is withdrawn from the humid exhaust air and its total temperature remains unchanged. Hence, under stagnation conditions, the saturation temperature remains unchanged, and therefore, no droplets are formed. A main advantage of the solution may thus be seen in allowing to bypass any component of the energy conversion arrangement, which under respective conditions has a strong contrail contribution. The emission of fewer or no droplets from the exhaust outlet reduces the contrail impact of the energy conversion system.

Furthermore, for example, if the expansion device comprises a turbine, bypassing the expansion device may help to prevent the turbine from stalling or blocking in case of an overload by a certain mass flow and/or volumetric flow of exhausts entering the turbine. The bypass duct can thus also be used for regulating the turbine and/or operating it in a desired operating range. The bypass duct may additionally help to prevent unwanted condensation of water vapour contained in the exhausts within the turbine. This particularly is the case, if any means, such as a heating device and/or heat exchange device arranged upstream of the expansion device is not present, not enabled or does not provide an amount of heat to the exhausts sufficient for avoiding the condensation.

According to an embodiment of an energy conversion arrangement, the bypass duct connects to the flow path via a junction. The water separator can be arranged in the bypass duct. The flow junction can divert the exhausts to the water separator. The junction may be located and shaped such that it enables to advantageously branch off and/or completely guide the exhausts such that they are led through the bypass duct. Thereby, the junction helps in improving operation and flexibility of the energy conversion arrangement.

According to an embodiment of an energy conversion arrangement, the junction comprises at least one switch valve for switching the flow path from the fuel conversion device to the expansion device and/or the exhaust outlet. The switch valve may be located, shaped, and/or operated such that it enables to advantageously branch off and/or completely guide the exhausts such that they are led through the bypass duct. Thereby, the switch valve helps in further improving operation and flexibility of the energy conversion arrangement.

According to an embodiment of an energy conversion arrangement, the switch valve allows for gradual switching of the flow path. Thereby, an amount of exhausts passing through the bypass duct and/or the expansion device can be regulated and/or adjusted as required. This helps in further improving operation and flexibility of the energy conversion arrangement.

According to an embodiment of an energy conversion arrangement, the switch valve allows for a steplessly variable switching of the flow path. Thereby, an amount of exhausts passing through the bypass duct and/or the expansion device can be finely regulated and/or adjusted according to respective requirements. This helps in further improving controllability and flexibility of the energy conversion arrangement.

According to an embodiment, the energy conversion arrangement further comprises a control unit configured to monitor at least one contrail formation parameter having a contrail formation range indicating a likelihood of contrail formation by exhausts of the fuel conversion device and/or by an exhausts mix containing the exhausts of the fuel conversion device and further exhausts of the energy conversion arrangement, and to control a drying ratio of the exhausts by the at least one water separator to keep and/or bring the at least one contrail formation parameter out of at least one potential impact region of the contrail formation range indicative of a potential contrail impact to be avoided and/or reduced. A potential contrail impact can be avoided by avoiding or at least reducing contrails. The control unit allows to implement a control mechanism to switch between a contrail reduction mode and the standard operation mode of the energy conversion system. In the majority of flight conditions, no contrail reduction is needed, and the water separation may be omitted or at least reduced to a certain minimum amount. For example, water separation is only conducted, when certain contrail forming conditions are detected.

According to an embodiment, a contrail reduction device is configured to introduce droplets of water into the flow path, such that smaller droplets in the exhausts are collected through droplet coagulation. The contrail reduction device can be arranged upstream of the at least one water separator. The at least one water separator can have at least one exhaust inlet, at least one dry outlet, and at least one wet outlet. The contrail reduction device can be arranged in fluid connection with the exhaust flow and configured to introduce droplets of water into the exhaust flow. Thereby, droplets sprayed into the flow hinder nucleation due to their own growth through condensation and the related latent heat release. This reduces the supersaturation and hence the homogeneous nucleation. Should no homogeneous nucleation occur inside of the fuel conversion system, introducing large droplets can still be beneficial. The droplets then provide a phase boundary for condensation in the plume. This will reduce or at least suppress homogeneous nucleation in the plume, thus also helping to reduce contrail production and enhance natural dissipation of contrails.

According to an embodiment, the water introduced by the contrail reduction device is at least partly provided by the water separation device. With other words, water withdrawn from the exhausts by means of the water separator can be reintroduced into the exhausts by the contrail reduction device. The water separator or water separation device can thus help in enhancing synergetic effects of the contrail reduction device.

According to a further solution, a an energy conversion arrangement for an aircraft is provided, comprising a fuel conversion device, in particular a fuel cell system, for converting at least one fuel to electrical and/or mechanical energy; a flow path of the supply air leading from an air inlet for taking up the air from ambient surroundings, such as the atmosphere, and/or from inside a hull, e.g., from a cabin of the aircraft, to the fuel conversion device for converting the fuel, a flow path of exhausts leading from the fuel conversion device to an exhaust outlet for letting out the exhausts produced in the fuel conversion device by the fuel conversion; and a humidifying device arranged in the flow paths and configured to humidify the supply air with water from the exhausts.

According to the present solution, the humidifier can be used for humidification of the supply air which can be provided to a cathode side of fuel cells of the fuel cell system or could at least support such an air supply with humid air which may improve an efficiency and/or operation of the energy conversion arrangement, in particular of the fuel cell system. Furthermore, for the humidification process, discharged water can be used in the gaseous and/or liquid form. The exhausts may pass through the humidifier in a cross flow with respect to the supply air.

According to an embodiment, the exhausts pass through the humidifying device multiple times. The exhausts may pass through the humidifier at least two times, for example, by crossing the supply air. Therefore, the exhausts may be redirected within the humidifying device. Thereby, dehumidification of the exhausts and/or humidification of the supply air may be further improved.

According to an embodiment, the energy conversion arrangement further comprises an expansion device arranged in the flow path of the exhausts and configured to decompress the exhausts; wherein the humidifying device is arranged in the flow path of the exhausts before and/or after the expansion device. The expansion device may be configured to generate electrical and/or mechanical energy by expanding the exhausts. The expansion device may comprise at least one turbine. The expansion device may be part of an air supply system. Consequently, the expansion device may help to improve overall energetic efficiency of the energy conversion arrangement.

The humidifying device can make use of a relatively high humidity of the exhausts after leaving the turbine to humidify the supply air and therefore the fuel conversion device, in particular the fuel cell system. The relative humidity of the exhausts exiting the expansion device is commonly higher than the relative humidity of the exhausts entering the expansion device. In particular, arranging the humidification device after the expansion device allows for enhancing dehumidification of the exhausts and/or humidification of the supply air.

According to an embodiment, the humidifying device comprises at least two humidification stages, wherein a first humidification stage of the at least two humidification stages is configured to humidify the supply air with water from the exhausts from the expansion device, and wherein a second humidification stage of the at least two humidification stages is configured to humidify the supply air with water from the exhausts from the fuel conversion device. For example, a two-stage humidification of the supply air can be carried out: In a first stage, exhausts coming from the turbine and in a second stage, exhausts coming from the fuel cell device can be used. Such a two-stage arrangement has the advantage that sufficient humidification can be provided even if the exhausts after the turbine are not wet enough. Thereby, the use of two separate humidifiers can be avoided.

According to an aspect of an energy conversion arrangement, the energy conversion arrangement further comprises an air supply system for supplying the fuel conversion device with supply air for the fuel conversion arranged upstream of the exhaust outlet. Consequently, the exhausts may at least partly flow through the air supply system. Consequently, the air supply system may be used to heat up the exhausts. This may help in reducing contrail production in that a relative humidity of the exhausts is being reduced.

According to an aspect of an energy conversion arrangement, the air supply system comprises a compressing device for supplying the fuel conversion device with compressed inlet air to be used for the fuel conversion; and at least one heat exchange unit configured to extract heat from the compressing device and/or the compressed air to be used for the conversion. The compressing device and/or compressed air may be cooled by means of the heat exchange unit. Thus, the heat exchange may help to improve overall energetic efficiency of the energy conversion arrangement, while at the same time contributing to contrail reduction.

According to an aspect of an energy conversion arrangement, the at least one heat exchange unit is configured to heat up the exhausts. Heating up the exhausts may help in reducing a relative humidity of the exhausts. The reduced relative humidity may decrease the amount of contrails produced and may facilitate dissipation of any remaining contrails.

According to an embodiment, the energy conversion arrangement further comprises at least one particle filter element and/or at least one chemical filter element arranged in the flow path of the supply air before and/or after the at least one heat exchange unit, respectively. The at least one particle filter element may help to remove unwanted particles and/or contamination from the supply air. This may help to further improve operation of the humidifying device and/or the energy conversion device.

According to an embodiment, the air supply system is configured to be at least partly cooled by exhausts from the humidifying device. Exhausts from the turbine (which can be cooled down afterwards) may be used to cool down the supply air coming from a compressor/filter. The heat exchange unit may thus function as an air (exhausts) / air intercooler. This may help to further improve an efficient operation of the energy conversion arrangement.

According to an embodiment, the energy conversion arrangement further comprises at least one water separator arranged in a flow path of exhausts produced in the fuel conversion device and configured for separating water from products of the fuel conversion device on their way from the fuel conversion device to the exhaust outlet. The water separator may help to initially remove water from the exhausts when they have a particularly high relative humidity. Water separated from the exhausts may be discharged and/or used to supply the contrail reduction device of the energy conversion arrangement. Thereby, the water separator helps to avoid unwanted contrail impacts.

According to an embodiment, the at least one water separator is arranged between the fuel conversion device and the humidifying device. Such an arrangement of the water separator may particularly help to remove surplus water from the exhausts which may not be efficiently used and/or be necessary for the humidification process. This may help to further improve an efficient operation of the energy conversion arrangement.

According to an embodiment, the at least one water separator comprises a permeable membrane and/or absorbent material. The permeable membrane and/or absorbent material can be particularly permeable for water molecules. This allows for a simple construction as well as an efficient operation and of the at least one water separator.

According to an embodiment, the energy conversion arrangement further comprises a control unit configured to adjust a humidity of the supply air based on at least one measurement value to provide humidity control for the fuel conversion device. This allows for a control mechanism to switch between a contrail reduction mode and a standard operation mode of the energy conversion system, and/or to adjust a humidification of the supply air according to certain operational requirements of the fuel conversion device. This may help to further improve operation of the humidifying device and/or the energy conversion device, while at the same time allowing for selectively avoiding unwanted contrail impacts.

According to a further solution, a method for controlling an energy conversion arrangement for an aircraft, is provided, comprising a fuel conversion device with a fuel cell system for converting at least one fuel to electrical energy, the method comprising the steps of monitoring at least one contrail formation parameter having a contrail formation range indicating a likelihood of contrail formation by exhausts of the fuel conversion device and/or by an exhausts mix containing the exhausts of the fuel conversion device and further exhausts of the energy conversion arrangement; and controlling a mixing ratio of the exhausts of the fuel conversion device with the further exhausts of the energy conversion arrangement to keep and/or bring the at least one contrail formation parameter out of at least one potential impact region of the contrail formation range indicative of a potential contrail impact to be avoided.

According to an aspect, a control program for controlling an energy conversion arrangement of an aircraft is provided, comprising a fuel conversion device with a fuel cell system for converting at least one fuel to electrical energy, wherein the control program comprises instructions which, when the control program is executed by a control device, cause the control device to carry out a responding method.

According to an aspect, a computer-readable data carrier having stored thereon a corresponding control program is provided.

According to an aspect, a control device for controlling an energy conversion arrangement of an aircraft is provided, comprising a fuel conversion device with a fuel cell system for converting at least one fuel to electrical energy, wherein the control device is configured to carry out a corresponding method and/or comprises a corresponding computer-readable data carrier.

According to an aspect, an energy conversion arrangement for an aircraft, comprising a fuel conversion device with a fuel cell system for converting at least one fuel to electrical energy, wherein the energy conversion arrangement is configured to carry out a corresponding method and/or comprises a corresponding control device.

According to an aspect, an aircraft comprising a corresponding energy conversion arrangement is provided.

The proposed solution allows for a control mechanism to switch between a contrail reduction mode and the standard operation mode of the energy conversion system. In the majority of flight conditions, no contrail reduction is needed, and the mixing may be omitted or at least reduced to a certain minimum amount. For example, mixing is only conducted, when certain contrail forming conditions are detected.

Contrails may have numerous different impacts including larger or smaller climate impacts, depending on ice crystal density, shape etc. Hence, even if a formation of contrails cannot be completely avoided, at least certain unwanted impacts, such as negative climate impacts of the contrails, can be avoided or at least reduced. Some contrails have a negative radiative balance. In other words, they are cooling the climate. It is proposed to differentiate between warming and cooling contrails.

In order to avoid warming contrails, the mixing ratio can be increased. In case of cooling contrails, the mixing may be omitted or at least reduced, since the mixing process may create energy and/or pressure losses and also can cause unwanted upstream effects in the energy conversion arrangement. Through such a distinction, the probability of a creation of cooling contrails may be increased. The solution thus has the advantage over the prior art that it enables a selective and highly efficient way of reducing unwanted contrail impacts. Fuel cell aircrafts can thus be operated efficiently without or at least with merely a minimised contributing to negative climate due to contrail formation.

According to an embodiment of a method, for controlling the mixing ratio, an amount of exhausts admixed to the further exhausts and/or an amount of further exhausts admixed to the exhausts is being controlled. The respective amounts admixed may be specifically tailored to adjust the at least one contrail formation parameter in view of a current potential impact region. For example, properties of cooling contrails (droplet size, number, etc.) may be adjusted by adding defined amounts of TMS outflow and hence heat to the ASP outflow. This adds another degree of freedom to the suggested contrail avoidance possibilities. In particular, the aging of ice crystals and hence the resulting ice crystal shape could be influenced. Hence, in the event, that contrails may not be provided or could possibly be acceptable, they may be created in a manner that has the expected least negative or even a positive climate impact.

According to an embodiment of a method, the mixing ratio, an amount of exhausts admixed to the further exhausts and/or an amount of further exhausts admixed to the exhausts are or is, respectively, being held below a mixing threshold. The mixing threshold may be predefined. For example, the mixing threshold may be predefined for respective conditions of the energy conversion arrangement and/or the atmosphere surrounding the aircraft. The mixing ratio may thus be limited in order to not negatively impact efficiency and/or operability of the fuel conversion arrangement.

According to an embodiment of a method, the mixing ratio is being defined as a ratio having the amount of further exhausts as a nominator and the amount of exhausts as a denominator and is being kept zero, or at least essentially near zero, if the exhausts of the fuel cell system are out of the at least one potential impact region of the contrail formation range. Outside of contrail forming conditions, the outflows of TMS and ASP are separated, without any crossflows. This helps to avoid energy losses due to the mixing process.

According to an embodiment of a method, in a first impact region of the contrail formation range indicative of a first potential contrail impact, the exhausts of the fuel conversion device are being admixed to the further exhausts of the of the energy conversion arrangement and/or in a second impact region of the contrail formation range indicative of a second potential contrail impact, the further exhausts of the of the energy conversion arrangement are being admixed to the exhausts of the fuel conversion device. For example, in flight conditions where climate warming contrails form, the ASP outflow can be fully mixed with the TMS outflow, while in flight conditions where cooling contrails form, a controlled amount of the TMS outflow can be added to the ASP outflow to optimize the properties of the cooling contrail. A remaining TMS outflow can be emitted separately. This further helps to avoid energy losses due to the mixing process in that the mixing process is specifically tailored to respective flight conditions.

According to an embodiment of a method, a relative humidity of the exhausts is being at least temporarily reduced. For example, the relatively humidity of the exhausts of the energy conversion arrangement may be reduced by heating the exhausts. Furthermore, a relative humidity may be temporarily reduced by the mixing process, in particular, in that TMS outflow can be relatively drier than ASP outflow. The temporary reduction of the relative humidity of the exhausts helps to specifically and/or selectively apply contrail countermeasures as desired or required in respective flight conditions and/or on the ground.

According to an embodiment of a method, the contrail formation parameter comprises an exhaust temperature value, an exhaust pressure value and/or an exhaust humidity value of the exhausts, the further exhausts, and/or the exhausts mix, and/or an atmospheric temperature value, an atmospheric pressure value, an atmospheric humidity value, and/or atmospheric aerosol value of the atmosphere surrounding the aircraft. Any extrinsic and/or intrinsic physical and/or chemical property value of the exhausts, the further exhausts, the exhausts mix can be acquired, for example, before, during and/or after mixing the exhausts. An atmospheric concentration of aerosols can be indicative of respective particles and/or droplets contained in the atmosphere which may serve as nuclei for droplet and/or ice crystal formation. This further enhances the possibilities of allowing for a controlled application of the solution which further helps to apply contrail reduction manners in a flexible and adaptive manner.

According to an embodiment of a method, the contrail formation parameter comprises a plume condition value indicating at least one aspect of a physical and/or chemical condition of a plume of the exhausts and/or the exhausts mix behind the aircraft. The plume condition value may be detected by visual and/or radar detection means and may be detected from the aircraft, a satellite, a ground station and/or from another aircraft. The plume condition value may comprise at least one parameter value indicative of a temperature, pressure, humidity and/or composition of the plume, including of potential ice crystals contained therein. This further enhances the possibilities of allowing for a controlled application of the solution which further helps to apply contrail reduction manners in a flexible and adaptive manner.

According to an embodiment, the energy conversion arrangement further comprises a mixing assembly with at least one first control valve configured for admixing the exhausts of the fuel conversion device to the further exhausts of the of the energy conversion arrangement and/or with at least one second control valve configured for admixing the further exhausts of the of the energy conversion arrangement to the exhausts of the fuel conversion device. The control valves may be provided in the form of throttle devices configured to throttle a flow of the exhausts and/or the further exhausts, respectively, entering the mixing assembly. Thereby, flexible and adaptive way of adjusting the mixing ratio in the exhausts mix may be provided.

According to an embodiment of an energy conversion arrangement, the at least one first control valve is arranged in a flow path of the exhausts of the fuel conversion device downstream of an air supply system of the energy conversion arrangement and/or the at least one second control valve is arranged in a flow path of the further exhausts downstream of as thermal management system of the energy conversion arrangement. The air supply system (ASP) may provide air to the fuel conversion arrangement. The thermal management system (TMS) may help to regulate a temperature of the fuel conversion arrangement. By arranging the respective control valves downstream of the AFP and/or TMS, they may still fully fulfil their respective function and the impact of the mixing process on the operation of the fuel conversion arrangement can be minimised.

According to a further solution, a method for controlling an energy conversion arrangement for an aircraft, comprising a fuel conversion device with a fuel cell system having at least two fuel cell elements for converting at least one fuel to electrical energy, is provided, the method comprising the steps of monitoring at least one contrail formation parameter having a contrail formation range indicating a likelihood of contrail formation by exhausts of the fuel conversion device and/or by an exhausts mix containing the exhausts of the fuel conversion device and further exhausts of the energy conversion arrangement; and controlling the fuel cell system such the at least two fuel cell elements are being operated each at a different current density to keep and/or bring the at least one contrail formation parameter out of at least one potential impact region of the contrail formation range indicative of a potential contrail impact to be avoided.

Usually, voltage provided by a fuel cell decreases with higher current density, while the power density increases. In other words, fuel cells usually have a high efficiency at lower power levels, but a low efficiency at high power levels. The lower the efficiency, the more waste heat is produced. Nevertheless, and amount of water produced in the fuel cell per amount of hydrogen should remain constant.

The fuel cell system may comprise and/or may be comprised of at least one fuel cell unit containing multiple fuel cell elements which may be a single fuel cell that can constitute a respective smallest controllable element of the fuel cell unit. The aircraft may comprise multiple fuel cell units which may be used for generating electrical energy for propulsion of the aircraft and/or for powering auxiliary systems of the aircraft, such as an auxiliary power unit (APUs).

A deliberate efficiency reduction can be realized by operating fuel cell elements at different power densities. This can be achieved by operating some fuel cell driven propulsion units and/or engines at a higher power level and others which can thus be operated at a relatively low power level. Another option is to operate one or more fuel cell elements, e.g., stacks, within a fuel cell engine at a higher power density than the others. As a result, some stacks will provide little power at a high efficiency while others provide much power at a lower efficiency. Overall, the efficiency is lower than at an equal power density, the hydrogen consumption is higher, but the overall power provided to the aircraft can remain constant.

The proposed solution thus allows for an intentional degradation of the efficiency of the fuel cell reaction and can be applied to produce more heat in order to have an exhaust flow with a lower relative humidity, considering that a fuel cell usually has a lower efficiency at higher power densities. Consequently, a combined exhaust flow and/or exhausts mix can be warmer and much drier than the exhaust flow from the air supply system for themselves. This strongly reduces the risk for droplet condensation in the engine plume and hence reduces the risk of undesired contrail formation.

Contrails may have numerous different impacts including larger or smaller climate impacts, depending on ice crystal density, shape etc. Hence, even if a formation of contrails cannot be completely avoided, at least certain unwanted impacts, such as negative climate impacts of the contrails, can be avoided or at least reduced. Respective controlled contrail reduction measures should thus be applied only during flight through a region with the risk for contrail formation.

According to an embodiment of a method, the at least two fuel cell elements are associated to respective different fuel cell stacks of the fuel cell system. In other words, a stack-wise imbalance may be used to operate the at least two fuel cell elements at a different current density. Such an imbalance may be a simple way to provide increased heat output for keeping and/or bringing at least one contrail formation parameter out of at least one potential impact region of the contrail formation range indicate of a potential contrail region to be avoided.

According to an embodiment of a method, at least one of the at least two fuel cell elements is operated at a different fuel conversion rate as the other at least one of the at least two fuel cell elements. The different current densities of the at least two fuel cell elements may be achieved by the different fuel conversion rates. The resulting imbalance in the fuel conversion rate of the at least two fuel cell elements may again be a simple way to provide increased heat output for keeping and/or bringing at least one contrail formation parameter out of at least one potential impact region of the contrail formation range indicate of a potential contrail region to be avoided.

According to an embodiment of a method, at least one of the at least two fuel cell elements is operated at a different power density as the other at least one of the at least two fuel cell elements. For example, two fuel cell elements of the same fuel cell unit may be operated at different power density. Thereby, highly flexible way of adjusting the power output and thus the waste heat ratio of the fuel cell system may be provided.

According to an embodiment of a method, a waste heat ratio of the fuel cell system is at least temporarily being increased to bring the at least one contrail formation parameter out of the contrail formation range. For example, the waste heat ratio may be increased by operating the at least two fuel cell elements at a different current density. Alternatively, or additionally, a thermal management system may be controlled in a manner that the waste heat ratio is at least temporarily increased. This may further help to reduce a relative humidity of the exhausts and thus the risk of contrail formation.

According to an embodiment of a method, a temperature of exhausts produced in the fuel conversion device by the fuel conversion is being at least temporarily increased for bringing the at least one contrail formation parameter out of the contrail formation range. For example, the temperature may be increased by operating the at least two fuel cell elements are at a different current density. Alternatively, or additionally, a thermal management system may be controlled in a manner that the temperature is at least temporarily increased. This may additionally help to reduce a relative humidity of the exhausts and thus the risk of contrail formation.

According to an embodiment of a method, a relative humidity of the exhausts is being at least temporarily reduced for bringing the at least one contrail formation parameter out of the contrail formation range. A temporary reduction of relative humidity for a selected flight region may be achieved by a targeted application of the proposed solution, adjusting the internal balance of the fuel cell elements and/or energy output of the fuel cell system such that a thermal energy output can be increased for at least a part of a selected flight path to keep and/or bring the at least one contrail formation parameter out of at least one potential impact region of the contrail formation range indicative of a potential contrail impact to be avoided.

According to an embodiment of a method, an aircraft speed and/or aircraft altitude is held essentially unchanged within a predefined speed range and/or altitude range, respectively. In other words, the aircraft may increase fuel consumption and/or power output by the energy conversion arrangement through adjusting the internal balance of the fuel cell elements and/or energy output of the fuel cell system the at least one contrail formation parameter out of the contrail formation range without changing speed and/or altitude. At a lower efficiency, the fuel cell produces more waste heat in relation to the produced water. This reduces the relative humidity at the combined exhaust and hence reduces the risk for droplet formation, condensation, and contrail formation.

According to an embodiment of a method, the contrail formation parameter comprises an exhaust temperature value, an exhaust pressure value and/or an exhaust humidity value of the exhausts, the further exhausts, and/or the exhausts mix, and/or an atmospheric temperature value, an atmospheric pressure value, an atmospheric humidity value, and/or atmospheric aerosol value of the atmosphere surrounding the aircraft. Any extrinsic and/or intrinsic physical and/or chemical property value of the exhausts, the further exhausts, the exhausts mix can be acquired, for example, before, during and/or after mixing the exhausts. An atmospheric concentration of aerosols can be indicative of respective particles and/or droplets contained in the atmosphere which may serve as nuclei for droplet and/or ice crystal formation. This further enhances the possibilities of allowing for a controlled application of the solution which further helps to apply contrail reduction manners in a flexible and adaptive manner.

According to an embodiment of a method, the contrail formation parameter comprises a plume condition value indicating at least one aspect of a physical and/or chemical condition of a plume of the exhausts and/or the exhausts mix behind the aircraft. The plume condition value may be detected by visual and/or radar detection means and may be detected from the aircraft, a satellite, a ground station and/or from another aircraft. The plume condition value may comprise at least one parameter value indicative of a temperature, pressure, humidity and/or composition of the plume, including of potential ice crystals contained therein. This further enhances the possibilities of allowing for a controlled application of the solution which further helps to apply contrail reduction manners in a flexible and adaptive manner.

According to a further possible solution, a method for controlling an energy conversion arrangement for an aircraft, comprising a fuel conversion device with a fuel cell system for converting at least one fuel to electrical energy, is provided, the method comprising the steps of monitoring at least one contrail formation parameter having a contrail formation range indicating a likelihood of contrail formation by exhausts of the fuel conversion device and/or by an exhausts mix containing the exhausts of the fuel conversion device and further exhausts of the energy conversion arrangement; and controlling the fuel cell system such that its energy output is increased to keep and/or bring the at least one contrail formation parameter out of at least one potential impact region of the contrail formation range indicative of a potential contrail impact to be avoided.

According to an embodiment of a method, the fuel cell system has at least two fuel cell elements, and a current density of at least one of the at least two fuel cell elements is increased. The fuel cell elements can be associated to respective different fuel cell stacks of the fuel cell system. The fuel cell system may comprise and/or may be comprised of a fuel cell unit containing multiple fuel cell elements which may be a single fuel cell that can constitute a respective smallest controllable element of the fuel cell unit. The aircraft may comprise multiple fuel cell units which may be used for generating electrical energy for propulsion of the aircraft and/or for powering auxiliary systems of the aircraft, such as an auxiliary power unit (APUs). This allows a controlled application of the solution to selected fuel cell elements which further helps to apply contrail reduction manners in a flexible and adaptive manner.

According to an embodiment of a method, a fuel conversion rate of the fuel cell system is being increased. At least one of the at least two fuel cell elements or units can be operated at a different fuel conversion rate as the other at least one of the at least two fuel cell elements or units, respectively. At least one of the at least two fuel cell elements or units can be operated at a different power density as the other at least one of the at least two fuel cell elements or units. This additionally allows a controlled application of the solution to selected fuel cell elements which further helps to apply contrail reduction manners in a flexible and adaptive manner.

According to an embodiment of a method, an electrical output and/or a thermal output of the energy conversion arrangement is being increased. The increased electrical output may be provided to a propulsion system and/or to an energy storage system of the aircraft. A waste heat ratio of the fuel cell system can be at least temporarily increased. The additional waste heat can be used to reduce a relative humidity of the exhausts and thus the risk of contrail formation.

According to an embodiment of a method, an energy supply to at least one propulsion unit of the aircraft is being increased. The propulsion system may comprise multiple propulsion units. The respective at least one propulsion unit and thus deliver a higher thrust than other propulsion units of the aircraft. This may further help to bring a waste heat ratio of the at least one propulsion unit and to a range where a relative humidity of the exhausts and thus the risk of contrail formation can be reduced to a desired degree.

According to an embodiment of a method, a temperature of exhausts produced in the fuel conversion device by the fuel conversion is being at least temporarily increased. For example, a thermal management system may be controlled in a manner that the temperature of exhausts and the fuel conversion device is at least temporarily increased, such that the heat flow of the exhausts is increased. This may further help to reduce a relative humidity of the exhausts and thus the risk of contrail formation.

According to an embodiment of a method, a relative humidity of the exhausts is being at least temporarily reduced. A temporary reduction of relative humidity for a selected flight region may be achieved by a targeted application of the proposed solution, adjusting the energy output of the fuel cell system such that its energy output can be increased for at least a part of a selected flight path to keep and/or bring the at least one contrail formation parameter out of at least one potential impact region of the contrail formation range indicative of a potential contrail impact to be avoided.

According to an embodiment of a method, an aircraft speed and/or aircraft altitude are or is, respectively, being increased. In other words, the aircraft may accelerate and/or climb for keeping and/or bringing the at least one contrail formation parameter out of the contrail formation range. Due to acceleration and/or climbing, the energy output of the fuel cell system can be at least temporarily increased. The aircraft speed and/or the aircraft altitude can be held essentially unchanged before and/or after increase in order to be kept within a predefined speed range and/or altitude range, respectively. An increase of the velocity of a fuel cell aircraft during flight may be particularly applied through regions with a certain risk of contrail formation. An increased flight velocity requires more power, which means that the fuel cells operate at a lower efficiency. At a lower efficiency, the fuel cell produces more waste heat in relation to the produced water. This reduces the relative humidity at the combined exhaust and hence reduces the risk for droplet formation, condensation and contrail formation.

According to an embodiment of a method, the contrail formation parameter comprises an exhaust temperature value, an exhaust pressure value and/or an exhaust humidity value of the exhausts, the further exhausts, and/or the exhausts mix, and/or an atmospheric temperature value, an atmospheric pressure value, an atmospheric humidity value, and/or atmospheric aerosol value of the atmosphere surrounding the aircraft. Any extrinsic and/or intrinsic physical and/or chemical property value of the exhausts, the further exhausts, the exhausts mix can be acquired, for example, before, during and/or after mixing the exhausts. An atmospheric concentration of aerosols can be indicative of respective particles and/or droplets contained in the atmosphere which may serve as nuclei for droplet and/or ice crystal formation. This further enhances the possibilities of allowing for a controlled application of the solution which further helps to apply contrail reduction manners in a flexible and adaptive manner.

According to an embodiment of a method, the contrail formation parameter comprises a plume condition value indicating at least one aspect of a physical and/or chemical condition of a plume of the exhausts and/or the exhausts mix behind the aircraft. The plume condition value may be detected by visual and/or radar detection means and may be detected from the aircraft, a satellite, a ground station and/or from another aircraft. The plume condition value may comprise at least one parameter value indicative of a temperature, pressure, humidity and/or composition of the plume, including of potential ice crystals contained therein. This further enhances the possibilities of allowing for a controlled application of the solution which further helps to apply contrail reduction manners in a flexible and adaptive manner.

According to an alternative or additional solution, an energy conversion arrangement for an aircraft is provided, comprising a fuel conversion device, in particular a fuel cell system, for converting at least one fuel to electrical and/or mechanical energy, and an exhaust outlet for letting out exhausts produced in the fuel conversion device by the fuel conversion; wherein at least one mixing assembly is arranged in a flow path of the exhausts before and/or after the exhaust outlet and is configured to mix the exhausts with further exhausts from the energy conversion arrangement.

Waste heat of a fuel cell aircraft system can be used in the mixing assembly to avoid a high supersaturation in the plume of the discharged humid exhaust flow of fuel conversion device, e.g., a fuel cell system. This can be achieved by mixing the humid exhaust flow of the air supply system with a warm and dry gas flow before it can mix with the cold ambient air. Thereby, a maximum supersaturation in the plume and hence the number of droplets formed therein may be reduced. A decreased number of droplets reduces an amount of possible ice crystal formation and hence reduces contrail impact. In principle, a corresponding solution may utilise any heat source for providing the further exhausts.

According to an aspect of an energy conversion arrangement, the energy conversion arrangement further comprises a thermal management system configured to produce the further exhausts. A further exhaust flow provided by the thermal management system can be advantageous as it offers large amounts of waste heat and is usually located in close vicinity to the humid exhaust flow of the fuel conversion device. Consequently, the thermal management system may contribute to enhancing and overall energetic efficiency of the energy conversion arrangement, while at the same time reducing contrail production.

According to an aspect of an energy conversion arrangement, the thermal management system is configured as a heat exchanger. Thereby, the thermal management system may draw waste and/or surplus heat from any component of the aircraft in order to provide the further exhausts. This helps in further improving an overall energetic efficiency of the aircraft while at the same time contributing to contrail reduction.

According to an aspect of an energy conversion arrangement, the thermal management system comprises at least one heat exchanger element configured to extract heat from the fuel conversion device and/or any auxiliary energy conversion unit. The heat exchanger element can help in cooling the fuel conversion device and/or any auxiliary energy conversion unit down to a desired respective operating temperature. This additionally helps in further improving an overall energetic efficiency of the aircraft while at the same time contributing to contrail reduction.

According to an aspect of an energy conversion arrangement, the thermal management system is configured to take in cooling air, heat up the cooling air, and discharge the heated-up cooling air as the further exhausts. Otherwise, the cooling air would probably have to be injected from the aircraft anyway. Consequently, using the cooling air for at least partly providing the further exhausts provides synergetic effects when applying the further exhausts for contrail reduction.

According to an aspect of an energy conversion arrangement, the thermal management system is configured to take in the cooling air from ambient surroundings. If taken up from ambient surroundings, in particular at cruising altitudes of aircrafts, the cooling air may be particularly cold and dry. Hence, heating up the cooling air by means of the thermal management system even further adds to the relative dryness of the cooling air. Thus, mixing the relatively dry cooling air with the exhausts can help in reducing humidity of the overall exhausts of the aircraft, which may be beneficial for reducing contrails.

According to an aspect of an energy conversion arrangement, the thermal management system is configured to provide the fuel conversion device with a coolant at a coolant inlet temperature, and to receive back from the fuel conversion device the coolant at a coolant outlet temperature, wherein the coolant inlet temperature is lower than the coolant outlet temperature at least when the fuel conversion device operates at an operating temperature. The coolant thus helps in regulating the temperature of the fuel conversion device. Consequently, the coolant may contribute to enhancing and overall energetic efficiency of the energy conversion arrangement, while at the same time reducing contrail production.

According to an aspect of an energy conversion arrangement, the energy conversion arrangement further comprises an air supply system for supplying the fuel conversion device with supply air for the fuel conversion arranged upstream of the exhaust outlet. Consequently, the exhausts may at least partly flow through the air supply system. Consequently, the air supply system may be used to heat up the exhausts. This may help in reducing contrail production in that a relative humidity of the exhausts is being reduced.

According to an aspect of an energy conversion arrangement, the air supply system comprises a compressing device for supplying the fuel conversion device with compressed inlet air to be used for the fuel conversion; and at least one heat exchange unit configured to extract heat from the compressing device and/or the compressed air to be used for the conversion. The compressing device and/or compressed air may be cooled by means of the heat exchange unit. Thus, the heat exchange may help to improve overall energetic efficiency of the energy conversion arrangement, while at the same time contributing to contrail reduction.

According to an aspect of an energy conversion arrangement, the at least one heat exchange unit is configured to heat up the exhausts. Heating up the exhausts may help in reducing a relative humidity of the exhausts. The reduced relative humidity may decrease the amount of contrails produced and may facilitate dissipation of any remaining contrails.

According to an aspect of an energy conversion arrangement, the energy conversion arrangement further comprises an expansion device for decompressing the exhausts arranged in the flow path of the exhausts upstream of the mixing assembly. The expansion device may be configured to generate electrical and/or mechanical energy by expanding the exhausts. The expansion device may comprise at least one turbine. The expansion device may be part of the air supply system. Consequently, the expansion device may help to improve overall energetic efficiency of the energy conversion arrangement.

According to an aspect of an energy conversion arrangement, the further exhausts provide a gas flow that is relatively drier than the exhausts. Thus, mixing the further last with the exhausts can help in reducing humidity of the overall exhausts of the aircraft, which may be beneficial for reducing contrails. The mixing operation may be applied whenever necessary in order to achieve a desired amount of contrail reduction. Consequently, the mixing operation helps in providing a versatile store of measures for contrail reduction.

According to an aspect of an energy conversion arrangement, the mixing assembly comprises a further exhaust outlet opening configured to let out the further exhausts to ambient surroundings; wherein the exhaust outlet has an exhaust outlet opening configured to let out the exhausts to the ambient surroundings; and wherein the further exhaust outlet is arranged before the exhaust outlet with respect to an intended direction of movement of the aircraft during standard operation of the aircraft along a discharge line extending essentially in parallel to the direction of movement. The further exhaust outlet opening can be arranged before the exhaust outlet opening such that warm and dry further exhaust air is mixed with humid air exhausts from the fuel conversion device during operation of the aircraft. Mixing the further exhausts with the exhausts in such a way may help in additionally reducing a relative humidity of the overall exhausts of the aircraft. The reduced relative humidity may decrease the amount of contrails produced and may facilitate dissipation of any remaining contrails.

According to a further solution an energy conversion arrangement for an aircraft may be provided, comprising a fuel conversion device, in particular a fuel cell system, for converting at least one fuel to electrical and/or mechanical energy, and an exhaust outlet for letting out exhausts produced in the fuel conversion device by the fuel conversion; wherein at least one heating device is arranged in a flow path of the exhausts before the exhaust outlet and is configured to heat up the exhausts.

The heating device provides a heat source between the fuel conversion device and the exhaust outlet of the aircraft. The heating reduces the saturation, i.e., relative humidity, of the exhaust gas flow. A lower saturation reduces or altogether prevents droplet formation and condensation in the exhaust system. Droplet formation might still occur in the plume of the propulsion system. However, a likelihood of the formation of a large number of small droplets is reduced. This decreases the risk of contrail formation. Compared to the prior art, the solution is lighter, has lower costs and uses less space and power.

According to an aspect of an energy conversion arrangement, the energy conversion arrangement may further comprise an expansion device arranged in the flow path of the exhausts and configured to generate electrical and/or mechanical energy by expanding the exhausts. The electrical and/or mechanical energy generated by the expansion device may be used for operating the energy conversion arrangement, in particular the fuel conversion device. Consequently, an overall energetic efficiency of the energy conversion arrangement may be improved.

According to an aspect of an energy conversion arrangement, the expansion device comprises at least one turbine. By means of the at least one turbine, electrical and/or mechanical energy may be generated by the decompression of the exhausts. Hence, the at least one turbine helps in improving an overall energetic efficiency of the energy conversion arrangement.

According to an aspect of an energy conversion arrangement, the expansion device is arranged in the flow path of the exhausts after the heating device. The expansion device may be arranged between the heating device and the air outlet, i.e., before the air outlet. The heating device may thereby raise a temperature of the exhausts and may thereby increase a power output of the expansion device if used for generating electrical and/or mechanical energy. Thereby, the heating device helps in improving an overall energetic efficiency of the energy conversion arrangement.

According to an aspect of an energy conversion arrangement, the heating device comprises a catalytic converter for converting fuel residuals which have been left unconverted by the fuel conversion device to heat. The catalytic converter maybe configured to convert at least one fuel to heat. The catalytic converter, e.g., provided as a catalytic burner, can process leftover hydrogen from a fuel cell reaction. The hydrogen reacts with oxygen to water while releasing heat. Thereby, the catalytic burner may help in enhancing contrail reduction by means of the heating device. Furthermore, the catalytic can prevent fuel emissions from the energy conversion arrangement.

According to an aspect of an energy conversion arrangement, the catalytic converter is configured to convert an additional fuel to heat. Also, additional hydrogen might be added to the flow upstream of the catalytic converter. Thereby, the effect of the catalytic converter for providing heat to be added to the exhausts through the heating device can be optimised for further enhanced contrail reduction.

According to an aspect of an energy conversion arrangement, the energy conversion arrangement further comprises a residual sensor element configured to measure at least one residual parameter value corresponding to an amount of the fuel residuals. In other words, the residual sensor element may measure an amount of fuel residuals, e.g., hydrogen residuals, in the exhausts. The amount of fuel residuals can be expressed by means of the residual parameter value. The residual parameter value can be used for optimising operation of the energy conversion arrangement in order to further reduce contrail production.

According to an aspect of an energy conversion arrangement, the energy conversion arrangement further comprises an auxiliary fuel inlet arranged in the flow path of the exhausts before the catalytic converter for adding at least one fuel to the exhausts. By adding at least one fuel and/or additional fuel, the heat output of the catalytic converter can be adapted to respective requirements. Thus, the effect of the catalytic converter for providing heat to be added to the exhausts through the heating device can be optimised for further enhanced contrail reduction.

According to an aspect of an energy conversion arrangement, the heating device comprises at least one combustion unit configured to burn at least one fuel for heating up the exhausts. The combustion can be supplied with hydrogen from the same source as for the fuel cell. The combustion unit can provide additional heat to be introduced by the heating device. Thereby, the combustion unit can help in assuring a desired degree of contrail reduction.

According to an aspect of an energy conversion arrangement, the heating device comprises at least one heat exchange unit configured to heat up the exhausts. The heat exchanger can transfer heat from hotter flows in the fuel cell system. The heat exchange unit may provide any kind of waste and/or surplus heat to be used by the heating device. Thereby, the heat exchange unit can provide an efficient way for contrail reduction.

According to an aspect of an energy conversion arrangement, the energy conversion arrangement further comprises a compressing device for supplying the fuel conversion device with compressed supply air to be used for the fuel conversion; wherein the at least one heat exchange unit is configured to extract heat from the compressing device and/or the compressed supply air to be used for the conversion. Compressed supply air may be cooled by means of the heat exchange unit. Thereby, the heating device may help in further improving an overall energetic efficiency of the energy conversion arrangement, while at the same time contributing to contrail reduction.

According to an aspect of an energy conversion arrangement, the at least one heat exchange unit is configured to extract heat from the fuel conversion device and/or any auxiliary energy conversion unit. The heat exchange unit may be configured to cool down at least parts of the heat exchange unit and/or any auxiliary energy conversion unit. For example, auxiliary energy conversion units may be electrical and/or mechanical energy converters. Thereby, the heating device may help in further improving an overall energetic efficiency of the energy conversion arrangement, while at the same time contributing to contrail reduction.

According to an aspect of an energy conversion arrangement, the at least one heating device comprises an electrically powered heating element. The electric power for the electric heating can be supplied from the energy conversion arrangement. For example, the electric power may be provided through any energy recuperation means. Heating the exhausts by means of electric power may help in assuring a desired degree of contrail reduction.

According to another solution an energy conversion arrangement for an aircraft may be provided, comprising a fuel conversion device, in particular a fuel cell system, for converting at least one fuel to electrical and/or mechanical energy, and a contrail reduction device arranged in a flow path of exhausts produced in the fuel conversion device and configured to introduce droplets of water into the flow path, such that smaller droplets in the exhausts are collected through droplet coagulation.

The contrail reduction device can be arranged in fluid connection with the exhaust flow and configured to introduce droplets of water into the exhaust flow. Thereby, droplets sprayed into the flow hinder nucleation due to their own growth through condensation and the related latent heat release. This reduces the supersaturation and hence the homogeneous nucleation. Should no homogeneous nucleation occur inside of the fuel conversion system, introducing large droplets can still be beneficial. The droplets then provide a phase boundary for condensation in the plume. This will reduce or at least suppress homogeneous nucleation in the plume, thus also helping to reduce contrail production and enhance natural dissipation of contrails.

According to an aspect of an energy conversion arrangement, the contrail reduction device further comprises a spray nozzle, a pump, and a piping, wherein the piping is in fluid connection with the pump and adapted to conduct water to the spray nozzle. The droplets, preferably large droplets, can be introduced by one or more spray nozzles which are fed through a pump.

Consequently, only a few, lightweight and low-cost additional components are needed for implementing the contrail reduction device. A power consumption of these component is relatively small. This allows for an efficient contrail reduction.

According to an aspect of an energy conversion arrangement, the spray nozzle is configured to introduce droplets of water of a diameter of approx. at least 20 microns. In comparison, droplets already present in the exhausts as they leave the fuel conversion device, in particular the fuel cell, and/or any further installation following the fuel conversion device before the exhausts reach the contrail reduction device, may be expected to be relatively small, the majority of droplets having a diameter well below 1 µm (micron). Introducing droplets with the big a diameter of at least 20 µm can help in fostering droplet coagulation and thus contrail reduction.

According to an aspect of an energy conversion arrangement, the water introduced by the spray nozzle is at least partly a reaction product from the fuel conversion device. The liquid water can be provided from a fuel cell system. The water from the fuel cell system is a by-product of the fuel conversion which has to be ejected from the aircraft anyway. Hence, using the wastewater from the fuel conversion device for contrail reduction has synergetic effects in that the wastewater can be used in a beneficial way.

According to an aspect of an energy conversion arrangement, the water introduced by the spray nozzle is at least partly from an external reservoir. The external reservoir can provide the water for the contrail reduction during load stages of the fuel conversion device where the fuel conversion device itself does not produce sufficient wastewater. Hence, providing the external reservoir helps in enhancing readiness of the contrail reduction device.

According to an aspect of an energy conversion arrangement, wherein the water introduced by the spray nozzle is at least partly from a water separation device, preferably downstream of the contrail reduction device. In particular after the fuel cell stack, water separators can provide liquid water which has to be ejected from the aircraft anyways. Thus, the water separation device helps in enhancing synergetic effects of the contrail reduction device.

According to an aspect of an energy conversion arrangement, the energy conversion arrangement further comprises a compressing device, and an expansion device, wherein the compressing device and/or the expansion device are configured to increase the power output of the energy conversion arrangement. The expansion device may comprise a turbine. Thereby, energetic efficiency of the energy conversion arrangement can be further improved.

According to an aspect of an energy conversion arrangement, the spray nozzle is arranged in an air outlet downstream of the expansion device, preferably inside of the expansion device. In the expansion device, the water vapour saturation line can be crossed and with sufficiently high supersaturation, homogeneous nucleation of water droplets may occur. This may result in a relatively large number of tiny droplets which grow through condensation. The corresponding phase change and associated latent heat release may cause a return to thermodynamic equilibrium. Therefore, introducing droplets downstream and/or even inside of the expansion device may help in fostering the production of bigger size droplets after the expansion device which then help in reducing contrail production or at least facilitate dissipation of any contrails.

According to an aspect of an energy conversion arrangement, the spray nozzle comprises a plurality of nozzle elements. The plurality of nozzle elements may be arranged in a parallel and/or serial manner along the flow path of the exhausts to optimise the introduction of droplets. Thereby, collecting smaller droplets in the exhausts through droplet coagulation may be enhanced.

According to an aspect of an energy conversion arrangement, the energy conversion arrangement further comprises an air inlet, wherein the air inlet is in fluid connection with ambient air and/or cabin air of the aircraft. Ambient air and/or cabin air can be fed to the energy conversion arrangement, in particular the fuel conversion device. As ambient air can be rather dry and cold, whereas cabin air can rather be warm and dry in comparison to the ambient air, there utilisation for fuel conversion can help in optimising conversion temperatures in the fuel conversion device and thereby contribute to the reduction of contrails.

According to an aspect of an energy conversion arrangement, the energy conversion arrangement further comprises means to increase droplet coagulation, preferably a vortex generator. Within a vortex of the exhausts generated by the vortex generator, local pressure variations and/or alternations of laminar and/or turbulent flows of the exhausts may help in fostering droplet coagulation. Thus, the vortex generator can further reduce contrails.

According to an aspect of an energy conversion arrangement, the energy conversion arrangement further comprises sensors to measure ambient conditions and/or a sensor to measure condensation and droplet sizes. Ambient conditions, condensation and/or droplet sizes can significantly influence contrail formation. Hence, measuring ambient conditions, condensation and/or droplet sizes by respective sensors can help in optimising operation of the energy conversion arrangement, in particular the contrail reduction device, and thus contribute to effective contrail reduction.

According to an aspect of an energy conversion arrangement, the energy conversion arrangement further comprises heating and/or cooling devices to adapt a temperature of the water in order to increase the droplet size. Increasing the droplet size can help in fostering coagulation. Thus, operation of the energy conversion arrangement, in particular the contrail reduction device, can be further optimised for effective contrail reduction.

According to an aspect of an energy conversion arrangement, the energy conversion arrangement further comprises at least one of a humidifier, a dehumidifier and a heat exchanger. The humidifier, dehumidifier and/ or heat exchanger may help in further influence droplet coagulation. Hence, the humidifier, dehumidifier and/ or heat exchanger can help in optimising operation of the energy conversion arrangement, in particular the contrail reduction device, and thus contribute to effective contrail reduction.

According to an additional solution, an energy conversion arrangement for an aircraft may be provided, comprising a fuel conversion device, in particular a fuel cell system, for converting at least one fuel to electrical and/or mechanical energy; an expansion device arranged in a flow path of exhausts produced in the fuel conversion device and configured to decompress the exhausts; and a contrail reduction device configured to introduce droplets of water into the flow path of the exhausts before and/or within the expansion device.

Water droplets can be added before the expansion device (turbine or nozzle) of the air supply of the fuel conversion system, for example comprising a fuel cell system. These droplets can shift a condensation onset upstream in the flow path of the exhausts within the expansion device. In other words, adding the droplets before the expansion device may lead to an earlier condensation. The earlier condensation reduces the maximum supersaturation of the flow. This is due to the phase change and the associated latent heat release during condensation onto the spray droplets. Overall, a droplet spectrum in the exhausts exiting the expansion device can be shifted to fewer numbers and larger radii, which reduces the climate impact of subsequent contrails.

According to an aspect of an energy conversion arrangement, the contrail reduction device comprises a spray nozzle for injecting the water into the exhausts. The spray nozzle may be optimised for producing droplets of a desired size. Thereby, contrail reduction may be enhanced.

According to an aspect of an energy conversion arrangement, the energy conversion arrangement further comprises a pump for pressurising the water before introducing the droplets of water into the exhausts. The water pressure may be optimised for the injection of water into the flow path of the exhausts. This helps in further enhancing contrail reduction.

According to an aspect of an energy conversion arrangement, the water is at least partly a reaction product from the fuel conversion device. The water from the fuel conversion device will have to be attracted from the aircraft anyway. Liquid water can be provided from the fuel cell system. Consequently, using water from the fuel conversion device helps in providing synergetic effects when implementing the contrail reduction device.

According to an aspect of an energy conversion arrangement, the energy conversion arrangement further comprises a water separator for separating the water from products of the fuel conversion device. In particular after the fuel cell stack, water separators can provide liquid water which has to be ejected from the aircraft anyways. Hence, for example, a by-product (liquid water) of a fuel cell system can be used for contrail reduction. Hence, only a few additional components for the water injection, but no additional major system has to be introduced for reducing contrails.

According to an aspect of an energy conversion arrangement, the expansion device is configured to generate electrical and/or mechanical energy by decompressing the exhausts. The electrical and/or mechanical energy generated by the expansion device may be used for operating the energy conversion arrangement, in particular the fuel conversion device. Consequently, an overall energetic efficiency of the energy conversion arrangement may be improved.

According to an aspect of an energy conversion arrangement, the expansion device comprises a turbine. By means of the turbine, electrical and/or mechanical energy may be generated by the decompression of the exhausts. Hence, the turbine helps in improving an overall energetic efficiency of the energy conversion arrangement.

According to an aspect of an energy conversion arrangement, the expansion device comprises at least one throttle section. The expansion device may comprise a throttle valve. By the throttle section and/or the throttle valve, a desired rate of decompression of the exhausts may be achieved, possibly without causing any turbulences in the flow of the exhausts or at least less turbulences as may be produced by a turbine. Consequently, the throttle section and/or throttle valve may help in providing decompression while maintaining essentially laminar fluid flows. Furthermore, the throttle section and/or throttle valve may be provided in the bypass duct which may be arranged such that a turbine section is being bypassed with at least a part of the exhausts. Thereby, the throttle section and/throttle valve may help in optimising conditions for contrail reduction.

According to an aspect of an energy conversion arrangement, the expansion device comprises at least one turbine section. The expansion device may comprise multiple turbine sections. The at least one turbine section can be arranged such in the flow path of the exhausts that contrails may be reduced.

According to an aspect of an energy conversion arrangement, the contrail reduction device is configured to introduce the droplets between the at least one throttle section and the at least one turbine section. For example, the at least one injection point may be arranged after a throttle section and before a turbine section or vice versa. Other injection points along the flow path are possible, including injection points directly at exhaust of the aircraft. The energy conversion arrangement may further comprise an exhaust outlet for letting out exhausts produced in the fuel conversion system by the conversion. Introducing the droplets between the at least one throttle section and the at least one turbine section may help in optimising contrail reduction.

According to an aspect of an energy conversion arrangement, the contrail reduction device is configured to introduce the droplets at at least two different introduction points into the flow path of the exhausts. The at least 2 different introduction points may be used independently of each other for introducing the droplets. Hence, the at least two introduction points allow for optimising water introduction and thus contrail reduction.

According to an aspect of an energy conversion arrangement, the at least two different introduction points are spaced radially and/or axially apart from each other along the flow path. Any radial and/or axial distribution of the introduction points along the flow path can be optimised. Thereby, contrail reduction may be further improved.

According to an aspect of an energy conversion arrangement, the contrail reduction device is configured to introduce the droplets into a mid-turbine section into the flow path of the exhausts. For example, the mid-turbine section may be arranged between two turbine sections or within a turbine section. Introducing the droplets into a mid-turbine section can help in using thermodynamically optimised conditions for the water introduction in order to further enhance contrail reduction.

According to another additional solution, an energy conversion arrangement for an aircraft may be provided, comprising a fuel conversion device, in particular a fuel cell system, for converting at least one fuel to electrical and/or mechanical energy; an expansion device arranged in a flow path of exhausts produced in the fuel conversion device and configured to decompress the exhausts; an exhaust outlet for letting out exhausts produced in the fuel conversion device by the fuel conversion; and at least one bypass duct configured to allow the exhausts to bypass the expansion device on their way from the fuel conversion device to the exhaust outlet.

In a typical air supply system of a fuel conversion device, such as a fuel cell, ambient air is compressed and fed to the fuel conversion device. After the fuel conversion device, the now humid air is typically expanded in an expansion device, such as a turbine, and then emitted back to the ambient. The bypass duct can connect to any duct defining the flow path and/or any kind of source of the exhausts upstream of the expansion device and thus enable relatively humid exhausts from the fuel conversion device, such as air from a fuel cell, to partially, or completely bypass the expansion device, such as a turbine. Hence no or at least far less enthalpy is withdrawn from the fluid exhausts in comparison to if they are being decompressed in the expansion device.

A certain expansion in the bypass, e.g., in a valve or nozzle, may be inevitable, such that some droplets might form. This is due to the high saturation caused by the low static temperature which is a result of the high flow velocities during expansion. Consequently, the droplets will partly or completely evaporate when the flow is decelerated. However, when the flow of exhausts is decelerated, the static temperature rises again, as the total temperature remains unchanged. This will lead to a partial or complete evaporation of the droplets formed in the bypass. Hence, fewer droplets are emitted, and the contrail contribution of the energy conversion arrangement is reduced. Contrary to that, when being decompressed in the expansion device, for example, a turbine, the droplets might not evaporate, as the expansion device withdraws enthalpy and hence reduces the total temperature of the flow.

The solution particularly allows for bypassing the expansion device during flight through ISSR where persistent contrails can form. In this way, no enthalpy is withdrawn from the humid exhaust air and its total temperature remains unchanged. Hence, under stagnation conditions, the saturation temperature remains unchanged, and therefore, no droplets are formed. A main advantage of the solution may thus be seen in allowing to bypass any component of the energy conversion arrangement, which under respective conditions has a strong contrail contribution. The emission of fewer or no droplets from the exhaust outlet reduces the contrail impact of the energy conversion system.

Furthermore, for example, if the expansion device comprises a turbine, bypassing the expansion device may help to prevent the turbine from stalling or blocking in case of an overload by a certain mass flow and/or volumetric flow of exhausts entering the turbine. The bypass duct can thus also be used for regulating the turbine and/or operating it in a desired operating range. The bypass duct may additionally help to prevent unwanted condensation of water vapour contained in the exhausts within the turbine. This particular the case, if any means, such as a heating device and/or heat exchange device arranged upstream of the expansion device is not present, not enabled or does not provide an amount of heat to the exhausts sufficient for avoiding the condensation.

According to an aspect of an energy conversion arrangement, the bypass duct connects to the flow path via a junction. The junction may be located and shaped such that it enables to advantageously branch off and/or completely guide the exhausts such that they are led through the bypass duct. Thereby, the junction helps in improving operation and flexibility of the energy conversion arrangement.

According to an aspect of an energy conversion arrangement, the junction comprises at least one switch valve for switching the flow path from the fuel conversion device to the expansion device and/or the exhaust outlet. The switch valve may be located, shaped, and/or operated such that it enables to advantageously branch off and/or completely guide the exhausts such that they are led through the bypass duct. Thereby, the switch valve helps in further improving operation and flexibility of the energy conversion arrangement.

According to an aspect of an energy conversion arrangement, the switch valve allows for gradual switching of the flow path. Thereby, an amount of exhausts passing through the bypass duct and/or the expansion device can be regulated and/or adjusted as required. This helps in further improving operation and flexibility of the energy conversion arrangement.

According to an aspect of an energy conversion arrangement, the switch valve allows for a steplessly variable switching of the flow path. Thereby, an amount of exhausts passing through the bypass duct and/or the expansion device can be finely regulated and/or adjusted according to respective requirements. This helps in further improving controllability and flexibility of the energy conversion arrangement.

According to an aspect of an energy conversion arrangement, the bypass duct ends in the vicinity of the exhaust outlet. Thereby, the flow path of the exhausts leading through the expansion device and a flow path of the exhausts leading through the bypass duct may be joined near the exhaust outlet. This may help in mixing the exhausts from the expansion device and the bypass duct in an advantageous manner for reducing contrail production, for example, by means of a respective mixing assembly which may comprise a flow path of the exhausts exiting the expansion device and/or a flow path of the exhausts defined by the bypass duct, and/or respective outlets thereof.

According to an aspect of an energy conversion arrangement, the bypass duct ends within the exhaust outlet. Thereby, the bypass duct or termination or outlet opening thereof may form a part of the exhaust outlet and/or may be integrated therein. This may further help in mixing the exhausts coming from the expansion device and the bypass duct in an advantageous manner for reducing contrail production, for example, by means of a respective mixing assembly.

According to an aspect of an energy conversion arrangement, at the exhaust outlet, the flow path leading through the expansion device and the flow path leading through the bypass duct are joined. The exhaust outlet may comprise both, an outlet of the flow path leading through the expansion device, and an outlet of the flow path leading through the bypass duct. This may further help in mixing the exhausts from the expansion device and the bypass duct in an advantageous manner for reducing contrail production, for example, by means of a respective mixing assembly.

According to an aspect of an energy conversion arrangement, the flow path leading through the expansion device and the flow path leading through the bypass duct are at least partially extending and/or terminating in parallel and/or coaxially with respect to each other. On the one hand, this may help in arranging the flow paths such that it allows for a heat exchange between the exhausts that are led through the expansion device and the exhausts that are led through the bypass duct. On the other hand, mixing the exhausts from the expansion device and the bypass duct in an advantageous manner may be enhanced for reducing contrail production, for example, by means of a respective mixing assembly.

According to an aspect of an energy conversion arrangement, the energy conversion arrangement further comprises at least one sensor for providing at least one measurement value representing a temperature value, pressure value and/or humidity value of the exhausts and/or the energy conversion arrangement. The measurement value may be obtained in or at the flow path of the exhausts before, after and/or within the expansion device. Furthermore, the measurement value may be obtained for representing the surroundings of the energy system and/or an aircraft comprising the energy system, such that the measurement value represents any condition of the atmosphere surrounding the aircraft. Thereby, the at least one measurement value may help in operating the energy conversion arrangement in a way that contrails are avoided or at least reduced.

According to an aspect of an energy conversion arrangement, the energy conversion arrangement further comprises a control unit configured to adjust the flow path through the bypass duct based on the at least one measurement value. In particular bypassing a turbine may reduce the energetic efficiency of the energy system as no or at least less enthalpy can be regained from the exhaust flow. Hence, it may be beneficial to only activate the bypass when persistent contrails can form, such as during flight through an ISSR. Furthermore, the control unit may help to operate the expansion device in a desired and/or required manner. Thus, control unit helps in improving operation and flexibility of the energy conversion arrangement.

According to an aspect of an energy conversion arrangement, the control unit is configured to keep the at least one measurement value within a pre-defined value range, and/or above or below a predefined value limit. The switch valve may function as a two-way or three-way discharge valve. Preferably, the bypass duct may only be activated when there is a risk of persistent contrail formation. Such an active mode of the bypass duct may help to an overall impact of bypassing the expansion device on efficiency of the energy system. When activated, the system efficiency could be reduced as no enthalpy can be regained from a turbine. Consequently, the control unit helps in further improving operation and flexibility of the energy conversion arrangement.

According to an aspect of an energy conversion arrangement, the bypass duct connects to at least one mixing assembly which is arranged in a flow path of the exhausts before and/or after the exhaust outlet and is configured to mix the exhausts with further exhausts from the energy conversion arrangement. The bypass duct can be configured to bypass at least one contrail reduction device, heating device and/or heat exchange device arranged in a flow path of air fed to the fuel conversion device and/or in the flow path of the exhausts, respectively. This may help in further improving operation, flexibility, and efficiency of the energy conversion arrangement.

### Brief Description of the Drawings

The subject matter will hereinafter be described in conjunction with the following drawing figures, wherein like numerals denote like elements, and wherein:
Fig. 1 is a schematic side view of an aircraft comprising an energy system with an energy conversion arrangement producing a plume of exhausts during flight.
Fig. 2 is a schematic illustration of an energy conversion arrangement comprising a contrail reduction device.
Fig. 3 is a schematic illustration of the contrail reduction device of the energy conversion arrangement shown in Fig. 2 in operation.
Fig. 4 is another schematic of the contrail reduction device of the energy conversion arrangement shown in Fig. 2 in operation.
Fig. 5 is a schematic illustration of further embodiment of an energy conversion arrangement comprising a contrail reduction device.
Fig. 6. Is a schematic illustration of an expansion device of the energy conversion arrangement shown in Figs. 1 to 5.
Fig. 7 is a schematic illustration of an expansion device of the energy conversion arrangement shown in Figs. 1 to 6 with the contrail reduction device in operation.
Fig. 8 is a schematic diagram showing an effect of water droplet injection on a maximum nucleation rate of water droplets within exhausts of the energy conversion arrangement.
Fig. 9 is a schematic illustration of another embodiment of an energy conversion arrangement provided with a heating device.
Fig. 10 is a schematic illustration of the energy conversion arrangement shown in Fig. 9 where the heating device comprises a catalytic converter.
Fig. 11 is a schematic illustration of the energy conversion arrangement shown in Figs. 9 and 10 where the heating device comprises a combustion chamber.
Fig. 12 is a schematic illustration of the energy conversion arrangement shown in Figs. 9 to 11 where the heating device comprises a heat exchange device.
Fig. 13 is a schematic illustration of the energy conversion arrangement shown in Figs. 9 to 12 where the heating device comprises an electric heating element and a bypass duct is provided.
Fig. 14 is a schematic illustration of a thermal management system of any of the embodiments of an energy conversion arrangement shown herein.
Fig. 15 is a schematic diagram showing plume mixing lines in the atmosphere.
Fig. 16 is a schematic diagram of relative humidity within a plume while mixing in the atmosphere.
Fig. 17 is a schematic side view of aircrafts, a satellite and a control station configured for monitoring and/or controlling properties of a plume of exhausts during flight of an aircraft.
Fig. 18 is a schematic top view of an aircraft comprising a control device for monitoring and controlling properties a composition of exhausts.
Fig. 19 is a schematic illustration of a further embodiment of an energy conversion arrangement provided with at least one control valve for admixing the exhausts to the further exhausts and/or for admixing the further exhausts to the exhausts.
Fig. 20 is a schematic representation of possible steps of a method for operating the energy conversion arrangement.
Fig. 21 is a schematic illustration of an exemplary embodiment of an energy conversion arrangement comprising a humidifying device.
Fig. 22 is a schematic illustration of another exemplary embodiment of an energy conversion arrangement comprising a humidifying device.
Fig. 23 is a schematic illustration of a further exemplary embodiment of an energy conversion arrangement comprising a humidifying device.
Fig. 24 is a schematic illustration of another further exemplary embodiment of an energy conversion arrangement comprising a humidifying device.
Fig. 25 is a schematic illustration of an exemplary embodiment of an energy conversion arrangement comprising a water separator.
Fig. 26 is a schematic illustration of another exemplary embodiment of an energy conversion arrangement comprising a water separator.
Fig. 27 is a schematic illustration of a further exemplary embodiment of an energy conversion arrangement comprising a water separator.
Fig. 28 is a schematic illustration of another further exemplary embodiment of an energy conversion arrangement comprising a water separator.
Fig. 29 is a schematic perspective semi-transparent view of a water separator.
Fig. 30 is a schematic illustration of a model for an embodiment of an exhaust assembly of an energy conversion arrangement for creating a mixing zone.
Fig. 31 is a schematic illustration of a model of the mixing zone created by an embodiment of an exhaust assembly as illustrated in Fig. 30.
Fig. 32 is a schematic illustration of an embodiment of an exhaust assembly comprising a spoiler device.
Fig. 33 is a schematic illustration of another embodiment of an exhaust assembly comprising a cavity.
Fig. 34 is a schematic diagram of droplet formation parameters provided according to embodiments of an exhaust assembly creating a mixing zone.
Fig. 35 is a schematic illustration of an embodiment of an exhaust assembly configured for creating a mixing zone comprising a pre-mixing zone and a main mixing zone.
Fig. 36 is a schematic illustration of a further embodiment of an exhaust assembly configured for creating a mixing zone comprising a pre-mixing zone and a main mixing zone.
Fig. 37 is a schematic diagram of droplet formation parameters provided according to embodiments of an exhaust assembly configured for creating a mixing zone comprising a pre-mixing zone and a main mixing zone.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

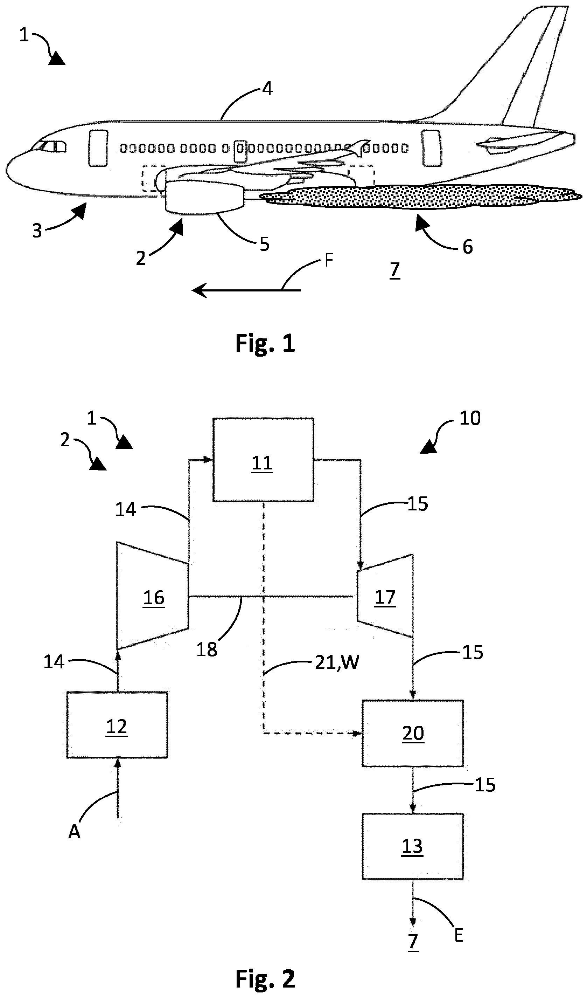

Fig. 1 shows a schematic side view of an aircraft 1 comprising an energy system 2 and a fuselage 3 with and surrounded by a hull 4. For example, the energy system 2 comprises a propulsion unit 5 emitting a plume 6 of humid exhaust air into the atmosphere 7 behind the aircraft 1 while the aircraft 1 travels through the atmosphere 7 along a travel direction F. The humid exhaust air from the air supply system is emitted from the aircraft and mixes with the ambient cold air. The humid exhaust air can be itself unsaturated, oversaturated or saturated with droplets present. Typical values for temperature and relative humidity of the emitted humid air range from 30°C to 80°C and 60% to 300%, respectively. Furthermore, the hull 4 may surround any interior space of the aircraft including a cabin for transporting passengers and goods as well as comprising any components of the energy system 2.

Fig. 2 shows a schematic illustration of an energy conversion arrangement 10 of the energy system 2 of the aircraft 1. The energy conversion arrangement 10 comprises a fuel conversion device 11, for example, provided as a fuel cell system for converting hydrogen to electricity and predominantly water vapour as exhausts E of the fuel conversion. Air A, for example taken from ambient surroundings, such as the atmosphere 7, and/or from inside the hull 4, e.g., from a cabin of the aircraft 1, is provided to the fuel conversion arrangement 11 through an air inlet 12 of the energy conversion arrangement 10. The exhausts E are released to the atmosphere 7 through an exhaust outlet 13 of the energy conversion arrangement 10.

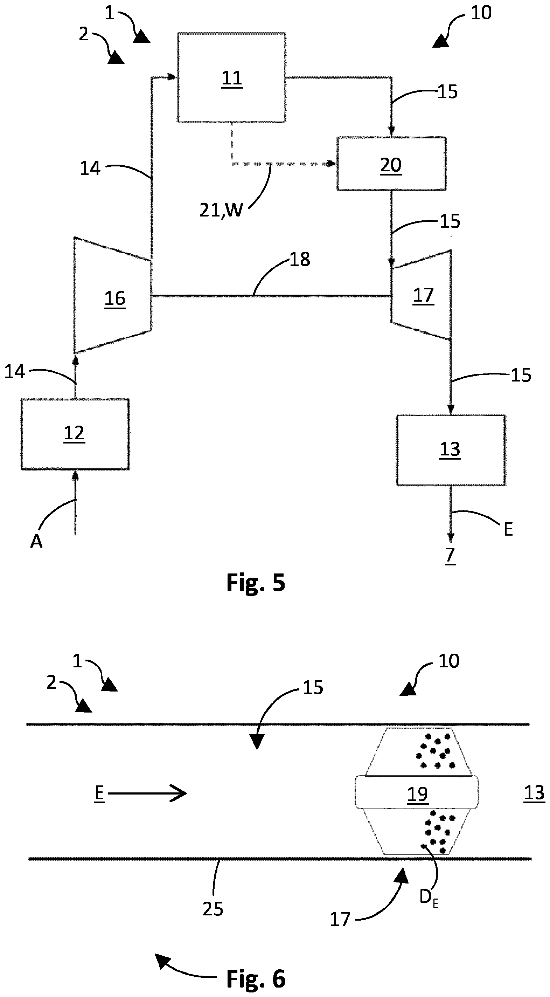

The air A is guided along a respective flow path 14 from the air inlet 12 to the fuel conversion device 11. The exhausts E are guided along a respective flow path 15 from the fuel conversion device 11 to the exhaust outlet 13. A compression device 16 of the energy conversion arrangement 10 is provided in the flow path 14 between the air inlet 12 and the fuel conversion device 11 for compressing the inlet air A. An expansion device 17 is provided in the flow path 15 between the fuel conversion device 11 and the exhaust outlet 13 for decompressing the exhausts E. The compression device 16 is connected to the expansion device 17 via a transmission line 18 which may comprise any kind of mechanical and/or electrical energy transmission means and for example, may be embodied as a shaft or alike. The compression device 16 may comprise a turbine 19 (see Fig. 6).

Furthermore, the energy conversion arrangement comprises a contrail reduction device 20. A water supply line 21 is provided to connect the contrail reduction device 22 to the fuel conversion device 11. Thereby, the contrail reduction device 20 may be provided with water W produced in the fuel conversion device 11 by the fuel conversion.

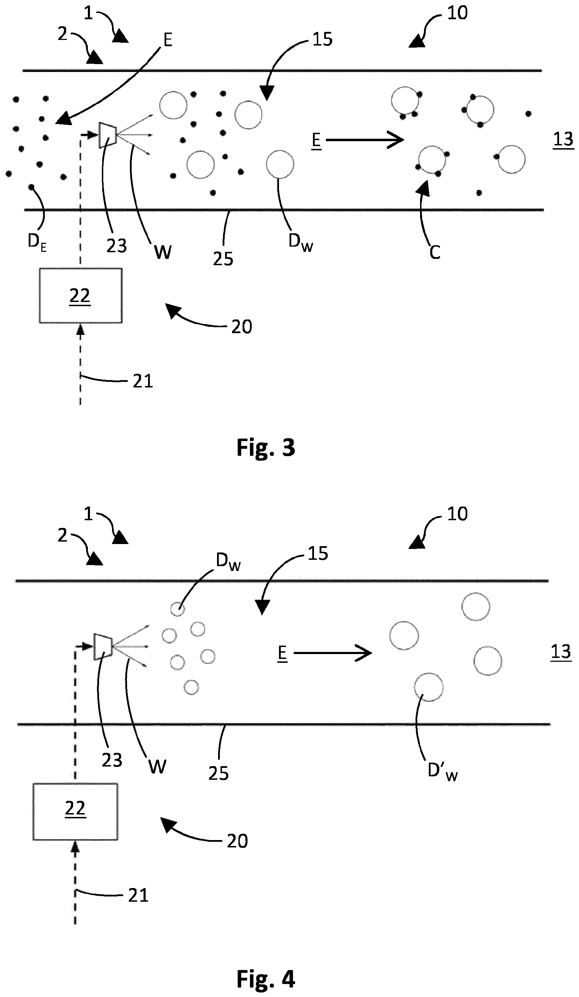

The air inlet 12 provides ambient air A to the compressing device 16 which supplies the fuel conversion device 11 with air A at an elevated pressure. The humid exhausts E, e.g., exhaust air of the fuel cell system of the fuel conversion device 11 is expanded in the turbine to provide power to the compressor. During expansion in the expansion device 17, a water vapour saturation line may be crossed and with a sufficiently high supersaturation, homogeneous nucleation may occur. This results in a large number of tiny exhaust droplets D_{E} which grow through condensation (see Fig. 3).

This phase change and the associated latent heat release cause a return to thermodynamic equilibrium. The resulting exhaust droplet D_{E} diameters d_{E} are expected to be small, with a majority well below 1 micron. If this large number of small exhaust droplets D_{E} is being emitted from the aircraft 1, there is a high risk of formation of a dense contrail from the plume 6 which might have a strong negative climate impact. To reduce this risk, the contrail reduction device 20 is supplied with liquid water W, which can be a by-product of the fuel conversion.

Fig. 3 shows a schematic illustration of the contrail reduction device 20 of the energy conversion arrangement 10 shown in Fig. 2 in operation. The contrail reduction device 20 comprises a pump 22 provided in the water supply line 21 to pressurise the water W and a spray nozzle 23 arranged in an air duct 25 to spray the water W into the exhausts E which may comprise droplets D_{E} with the respective droplet diameter d_{DE} of approximately below 1 µm by average before reaching the contrail reduction device 20. The liquid water W is provided to the spray nozzle 23 which creates water droplets Dw with an average diameter d_{DW} larger than 20 micron.

The smaller exhaust droplets D_{E} coagulate on the larger water droplets Dw and thus form coagulated droplets C. Effectively, the droplet number is reduced and the average diameter d_{AVG} is increased. The coagulated droplets C lead to less harmful contrails as their combined surface is smaller than a sum of the surfaces of the exhaust droplets D_{E} and the water droplets Dw. Size and velocity of the water droplets Dw sprayed from the spray nozzle 23 must be chosen in a way that the critical Weber Number of about 12 is not surpassed. Otherwise, the water droplets Dw will break up into much smaller droplets, counteracting the desired effect.

Fig. 4 shows another schematic duration of the contrail reduction device 20 of the energy conversion arrangement shown in Fig. 2 in operation. Here, no exhaust droplets D_{E} occur due to a lack of supersaturation of water vapour in the exhausts E. If the supersaturation before the contrail reduction device 20 is not sufficient for droplet formation, the contrail reduction device 20 can still reduce the risk for contrail formation. Without exhaust droplets D_{E}, the water vapor in the plume 6 oversaturates during plume mixing outside of the aircraft 1. Again, a large number of droplets with small diameters will be formed through homogeneous nucleation. In this case, droplets generated in the contrail reduction device 20 either grow in a slightly oversaturated flow through condensation to form enlarged water droplets D'w or, in an unsaturated flow, are still large enough to persist when emitted from the aircraft 1. During plume mixing, these pre-existing droplets Dw, D'w may provide phase boundaries for condensation which prevents high oversaturation and homogeneous nucleation. This leads to a small number of large droplets D'w instead of a large number of small droplets Dw.

Fig. 5 shows a schematic illustration of further embodiment of an energy conversion arrangement 10 comprising a contrail reduction device 20. Here, the contrail reduction device 20 is arranged in the flow path 15 between the fuel conversion device 11 and the expansion device 17 which comprises a turbine 19 (see Fig. 6). Liquid water W provided by fuel conversion device 11 is injected into the flow path 15 of the exhausts W upstream of the expansion device 17 using the spray nozzle 23 as illustrated in Figs. 3 and 4. The water droplets Dw begin to grow through condensation as soon as supersaturation is reached during expansion in the expansion device 17. Because of the phase change and the release of the latent heat, this limits the maximum supersaturation reached.

A lower maximum supersaturation corresponds to a smaller nucleation rate of water droplets Dw. This number decrease is larger than the droplet number introduced by the spray nozzle 23. In total, the droplet spectrum is again shifted to fewer, larger droplets C, D'w. The freezing of less droplets leads to an optically "thinner" contrail, reducing its climate impact, as the combined droplet surface is smaller.

Fig. 6. shows a schematic illustration of the expansion device 17 of the energy conversion arrangement 11 shown in Figs. 1 to 5 comprising the turbine 19.

Without any contrail reduction measure, the water vapor in the plume 6 may oversaturate during plume mixing outside of the aircraft 1. Again, a large number of droplets with small diameters would be formed through homogeneous nucleation.

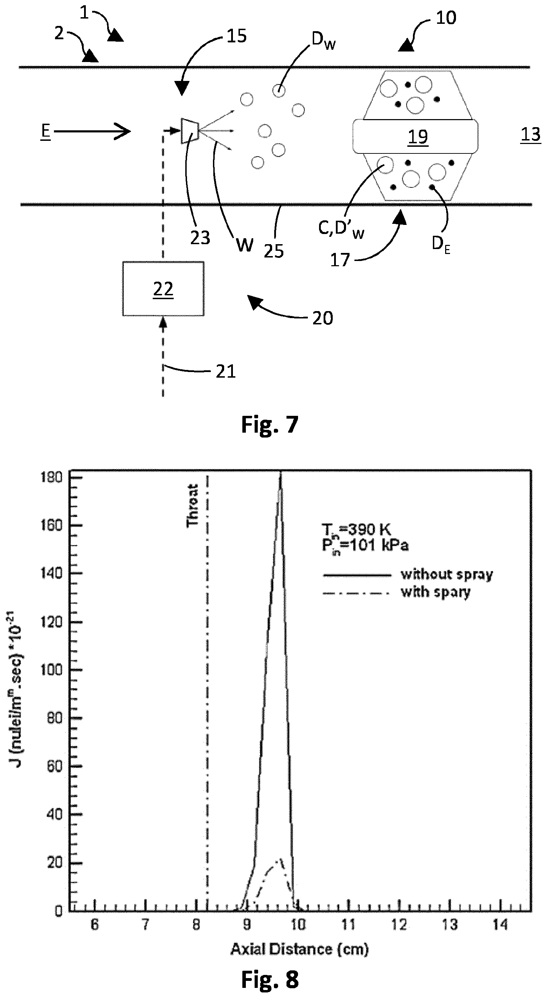

Fig. 7 shows a schematic illustration of an expansion device 20 of the energy conversion arrangement shown in Figs. 1 to 6 with the turbine 19 and the contrail reduction device 20 in the flow path 15 of the exhausts E upstream of the turbine 19 in operation. The injection of water droplets Dw provides phase boundaries for condensation during expansion of the exhausts E within the turbine 19 which prevents high oversaturation and reduces or avoids homogeneous nucleation. This leads to a small number of large droplets C, D'w instead of a large number of small droplets D_{E}. The injected water droplets Dw should be as small as possible. The larger the injected combined droplet surface is, the stronger is the reduction of the maximum supersaturation and nucleation rate.

Injecting water droplets Dw in front of the turbine 19 may pose a risk of droplet erosion, corrosion, and other damages because of liquid water W. However, respective mitigation measures are well known from steam turbine research.

Another option is to operate the contrail reduction device 20 in any of the embodiments described herein only when there is a risk of contrail formation. However, there might also be an efficiency improvement for the turbine 19 due to reduced phase change losses when operating the contrail reduction device 20. The fact that the injection of water droplets Dw reduces the maximum nucleation rate is well known to science (see Fig. 8).

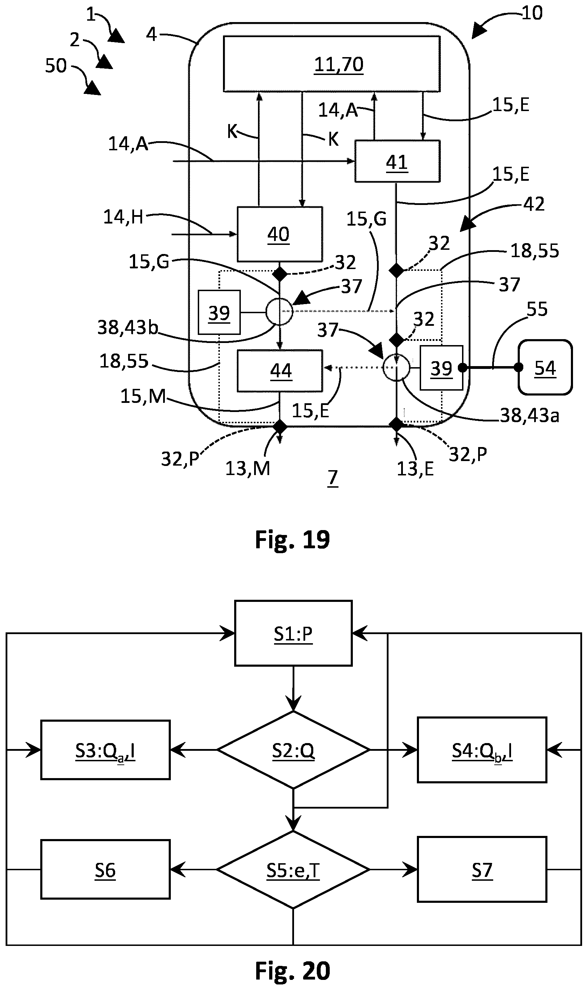

Fig. 8 shows a schematic diagram showing an effect of water droplet Dw injection on a maximum nucleation rate of water droplets Dw within exhausts E of the energy conversion arrangement 10 (see Teymourtash et al., "The effects of rate of expansion and injection of water droplets on the entropy generation of nucleating steam flow in a Laval nozzle", Heat Mass Transfer (2009) 45:1185-1198, p. 1196, Fig. 20: Effect of injection droplets on the rate of nucleation, α = 6°). Here it becomes apparent that the rate of nucleation decreases by the injection of water droplets Dw into the exhausts E. This can be interpreted such that latent heat released to the vapour reduces through a limited phase transition from vapourised to liquid water. However, this is dominated by a following condensation of water. If a final pressure is the same, also the amount of liquid water formed should be the same. Nevertheless, this amount should be distributed amongst a reduced number of drops or droplets which can help in reducing contrail production. A divergent angle α of 6° is assumed for a Laval nozzle underlying the present example.

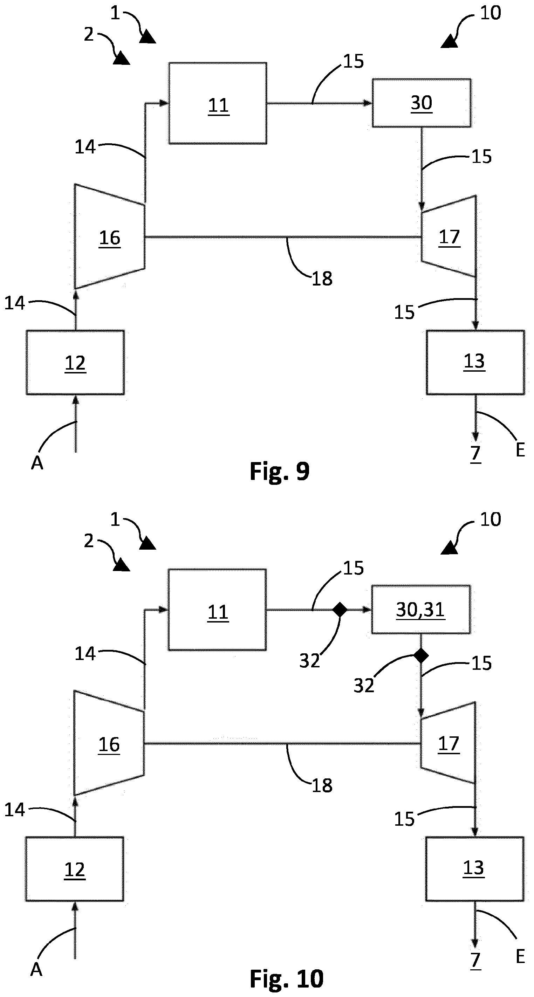

Fig. 9 shows a schematic illustration of another embodiment of an energy conversion arrangement 10 provided with a heating device 30. The heating device 30 is located in the flow path 15 between the fuel conversion device 11 and the exhaust outlet 13. In particular, the heating device 30 is located in the flow path 15 of the exhausts E upstream of the expansion device 17. The exhausts E, e.g., humid exhaust air from a fuel cell system of the fuel conversion device 11, is heated in the heating device 30. The heated exhausts E are being expanded in the expansion device 17, e.g., the turbine 19 thereof, to provide power to the compressing device 16 via the transmission line 18.

The saturation increases during expansion in the expansion device 17. However, the saturation level is overall smaller due to the heating provided by the heating device 30. Alternatively, or additionally, the heating device 30 can be placed in the flow path 15 downstream of the expansion device 17. This altogether prevents droplet formation or at least significantly reduces it. Fewer droplets pose a smaller risk to the formation of a dense contrail. A flow of exhausts E release to the atmosphere 7 with no or few droplets might still lead to droplet formation in the plume 6 outside of the aircraft 1. However, this is still expected to be beneficial as in this process the maximum achieved saturation level is assumed to be smaller than without heating. A smaller maximum saturation level corresponds with fewer, larger droplets C, D'w.

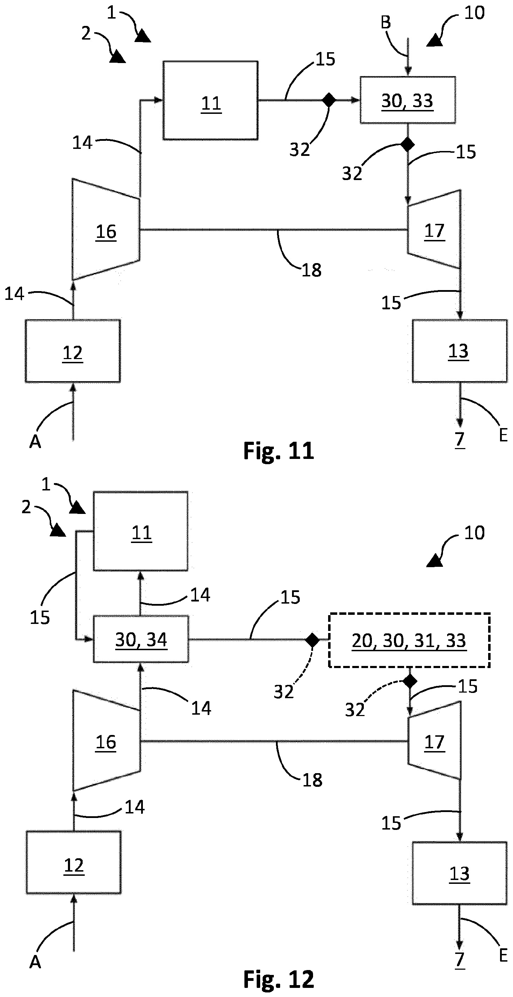

Fig. 10 shows a schematic illustration of the energy conversion arrangement 10 shown in Fig. 9 where the heating device 30 comprises a catalytic converter 31. The catalytic converter 31, for example provided as a catalytic burner, can process leftover fuel, e.g., hydrogen from a fuel cell reaction performed in the fuel conversion device 11. The fuel reacts with oxygen to water while releasing heat. The added heat overcompensates the saturation increase due to the added water W. The catalytic burner also prevents fuel emissions from the energy conversion arrangement 10. Sensors 32 may be provided measure a fuel concentration in the flow path 15 of the exhausts E before and/or after the catalytic burner 31. Additional fuel B can be added to the flow path 15 of the exhausts E upstream of the catalytic burner 31 (see Fig. 11).

Fig. 11 shows a schematic illustration of the energy conversion arrangement shown in Figs. 9 and 10 where the heating device 30 comprises a combustion chamber 33. depicts a fuel cell system with a combustion chamber which burns hydrogen. In the combustion chamber 33, the additional fuel B reacts with oxygen, for example in that hydrogen added as additional fuel B reacts water W, while releasing heat. The added heat overcompensates the saturation increase due to the added water W. The combustion also prevents fuel emissions from the energy conversion arrangement 10.

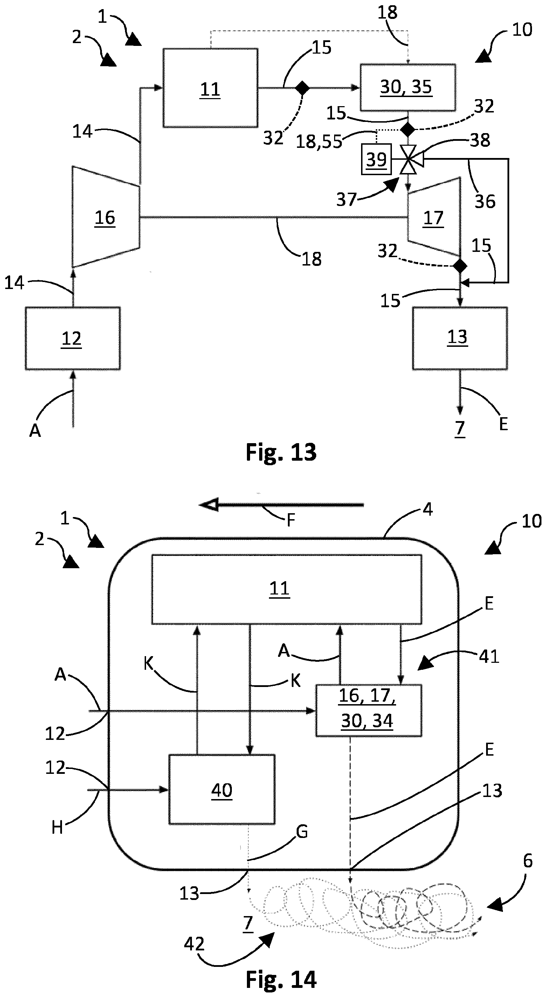

Fig. 12 shows a schematic illustration of the energy conversion arrangement 10 shown in Figs. 9 to 11 where the heating device 30 comprises a heat exchange device 34. The heat exchange device 30 adds heat to the exhausts E of the fuel conversion device 11 and thereby reduces the saturation before the expansion device 17. Alternatively, or additionally, the contrail reduction device 20, heating device 30, catalytic converter 31, sensors 32, and/or combustion chamber 33 may be provided in the flow path 15 of the exhausts E before, within, and/or after the expansion device 17. Heat not transferred from the outflow of the compressing device in the flow path 14 of the air A may be gained from other heat sources of the fuel conversion system 10, in particular from a thermal management system 40 which may comprise multiple heat exchange devices 30 and/or heat exchange elements (see Fig. 14).

Fig. 13 shows a schematic illustration of the energy conversion arrangement 10 shown in Figs. 9 to 12 where the heating device 30 comprises an electric heating element 35. The heating element 35 may provide electric heating to reduce contrail formation. The added heat reduces the saturation before the expansion device 17. Electric power may be provided to the heating element 35 by means of the transmission line 18 from the fuel conversion device 11 and/or from other sources (not shown).

Furthermore, the energy conversion arrangement 10 may comprise a bypass duct 36 connecting to the flow path 15 of the exhausts E via a flow junction 37. The flow junction 37 may comprise a switch valve 38 which, for example, may be operated in a stepless manner, to let the exhausts E through to the expansion device 17 and/or lead the exhausts E to the exhaust outlet 13 via the bypass duct 36. The switch valve 38 may be operated with the help of a control unit 39 which may be connected to at least one of the sensors 32 via respective transmission line 18 for transmitting energy and/or information.

In operation of the energy conversion arrangement 10, the exhausts E may be branched off from the flow path 15 at the flow junction 37 to bypass the expansion device 17 through the bypass duct 36, thereby forming an alternate or auxiliary flow path 15 for the exhausts E in addition to the main flow path 15 of the exhausts E leading through the expansion device 17. The amount of exhausts E bypassing the expansion device 17 may be controlled by means of the control unit 39 in order to keep any measurement value, such as a temperature value, a pressure value, and/or a humidity value, measured by means of at least one of the sensors 32 before, within, and/or after the expansion device 17 within, above, and/or below a respective desired or required value range and/or limit.

Alternatively, or additionally, the flow junction 37 maybe arranged within the expansion device 17, for example, between certain sections thereof. The flow path 15 leading through the expansion device 17 and the flow path 15 leading through the bypass duct 36 may be joined within and/or after the expansion device 17 and/or the exhaust outlet 13. The bypass duct 36 may be used to bypass any section or component of the energy conversion arrangement 10 as described herein. Therefore, at least one flow junction 38 may be arranged as desired or required for bypassing the expansion device 17, the control reduction device 20, the heating device 30, and/or the heat exchange device 34.

Fig. 14 shows a schematic illustration of a thermal management system 40 of any of the embodiments of an energy conversion arrangement 10 shown herein. The thermal management system 40 may emit further exhausts G, such as air and/or gases which preferably have a higher temperature and/or less relative humidity than the exhausts E. The further exhausts G can be released from the aircraft 1 by being emitted beyond the hull 4 in travel direction F before the exhausts E in the travel direction F. The exhausts E can have passed through an air supply system 41 comprising the compressing device 16, expansion device 17, heating device 30, and/or heat exchange device 34. Respective exhaust outlets 13 for the exhausts E and the further exhausts G may provide a mixing assembly 42.

The thermal management system 40 can receive further air H from the atmosphere 7 and/or from inside the hull 4. The further air H may be used in the thermal management system 40 to cool down a coolant K which is then supplied to the fuel conversion device 11 in order to maintain a desired temperature level for efficient fuel conversion in the fuel conversion device 11. The coolant K may then be that back to the thermal management system 40. The further air H can be warmed up by means of the coolant K from the fuel conversion device 11.

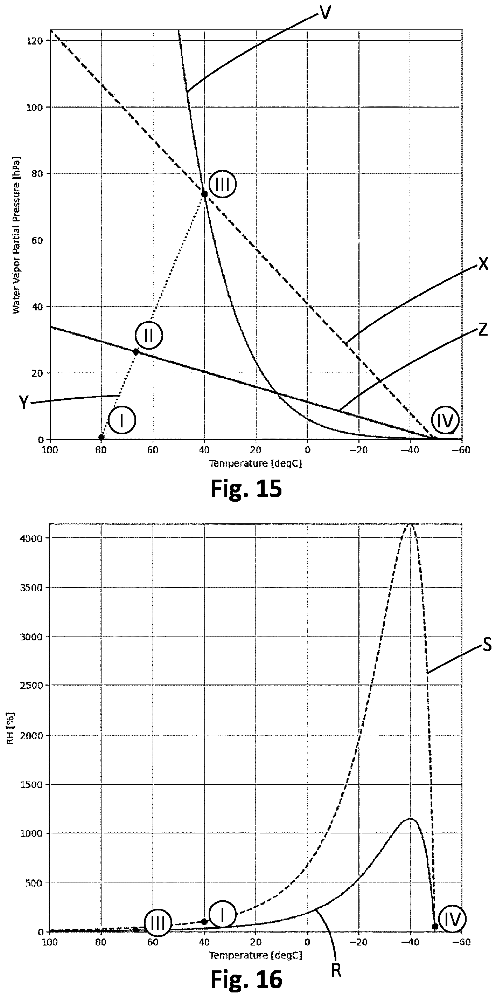

Fig. 15 shows a schematic diagram showing plume 6 mixing lines in the atmosphere 7 represented by respective water vapor partial pressure as a function of the temperature. The narrow solid curve (line V) is the saturation pressure with regards to liquid water The dashed line X represents the mixing of the humid exhaust E air at point III with the atmospheric air at point IV.

The mixing line X crosses the saturation line V. This means that all points on line X which are on the right hand side of line V are oversaturated. Mixing lines represent the ideal path the plume temperature and water vapor partial pressure would follow when mixing in the atmosphere 7, if no condensation occurs.

In Figure 15, exemplary conditions of such a flow are represented by point III.

Point II is the result of the mixing of the humid exhaust air (point III) and the warm, dry flow (point I). The mixing process between these two flows is represented by the dotted line Y. The thick solid line Z represents the mixing line between the mixed exhaust state (point II) and the ambient air (point IV).

Fig. 16 shows a schematic diagram of relative humidity within a plume 6 while mixing in the atmosphere 7. The solid line R on Figure 2 represents the evolution of a relative humidity R of the plume 6 as the exhausts E and further exhausts G (points III and I, respectively) mix with air under ambient atmospheric conditions (point IV). Obviously, in Figure 2 the mixing line R (solid line) does not reach as far into the supersaturated region as the mixing line S (dashed line), which does not feature any contrail reduction solution. The maximum supersaturation is much smaller than without the contrail reduction solution. This means that less droplets are formed and less condensation occurs, resulting in a reduced contrail formation and climate risk. In short, the goal is to reduce the gradient of the mixing line S. The warmer, drier, and higher mass flow of the further exhaust G is, the stronger is the effect.

This principle also works for undersaturated and oversaturated humid exhaust flows. If the humid exhaust flow is saturated with droplets present, its conditions are placed right on the saturation line. In this case, the mixing with a warmer, drier flow causes the (partial) evaporation of droplets. Nevertheless, the gradient of the mixing line S with the ambient air is reduced. In a preferred embodiment, the flow of further exhausts G of the thermal management system 40 is mixed with the humid flow of exhausts E of the air supply system 41. In principle, other waste heat flows work as well, but the thermal management system 40 provides a large mass flow of dry, warm air, in close vicinity of the air supply system 41. Performing the mixing operation still within the aircraft 1 or at least just at respective exhaust outlets 13 and/or a combined exhaust outlet 13 for exhausts E and further exhausts G is preferred as it provides the best control over the mixing process.

Further alternative and/or additional embodiments of the presented solution may involve different air supply architectures, such as blowers instead of compressors, air from cabin instead of from ambient, nozzle instead of and/or in addition to turbine 19, electric motor on a shaft between compression device 16 and turbine 19, humidifiers, dehumidifiers, heat exchangers, etc. Different sources of liquid water W may be used, namely from a tank, from cabin systems, from a water separation device downstream of any point of the thermal management system 40 and/or air supply system 41. Multiple spray nozzles 23, or other means of generating disperse liquid water W may be located inside of the turbine 19 and/or inside of the fuel conversion device 11. Sensors 32 may be applied to measure ambient conditions and/or to measure condensation and droplet sizes in the energy conversion arrangement 10. Furthermore, sensors 32 may be used to measure contrail occurrence and effectiveness of the contrail reduction device 20. Controls may be used to adapt the spray flow for different droplet sizes, constant-mode, active-mode, etc. Heating and/or cooling devices 30 may be used to adapt the liquid water temperature in order to reach a smaller droplet size.

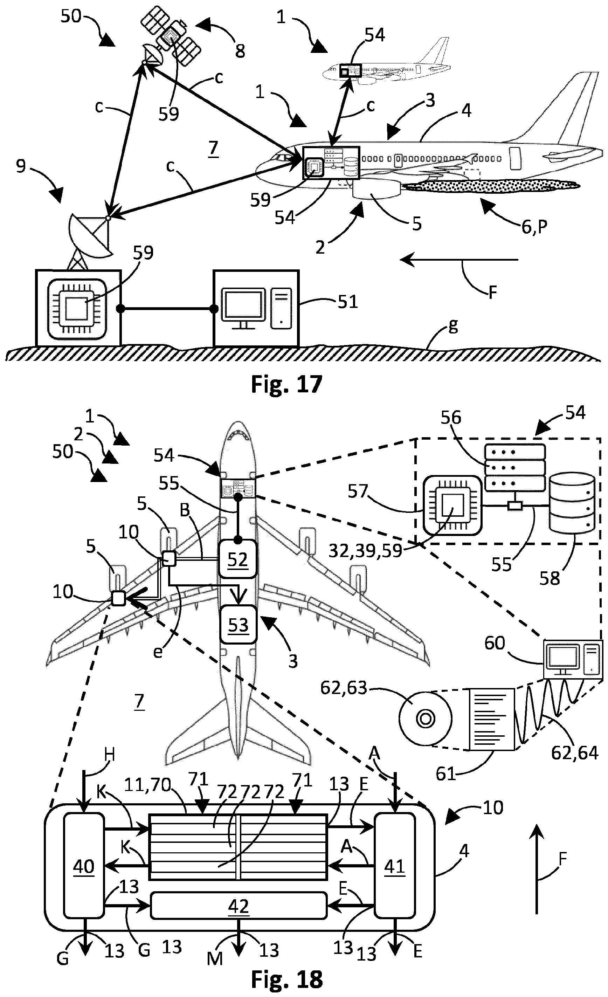

Fig. 17 shows a schematic side view of aircrafts 1, a satellite 8 and a control station 9 configured for monitoring and/or controlling properties of a plume 6 of exhausts during flight of at least one of the aircrafts 1, in particular, with regard to at least one contrail formation parameter P of exhausts, the plume 6 and/or the atmosphere 7. The satellite can 8 be orbiting in space and monitor the aircrafts 1 and their plumes 6. The ground station 9 can be positioned on the ground g. The aircrafts 1, satellite 8 and/or ground station 9 may be connected to, provide and/or each comprise the control system 50 and/or a computer system 51 configured to perform monitoring and control functions for and/or in connection with operation of the energy system 2 of the aircraft 1.

As part of the control system 50, the aircrafts 1, satellite 8 and/or ground station 9 may comprise and/or be connected to at least one computing device 51, at least one control device 54 and/or at least one control element 59 (see Fig. 18). Thereby, individually, and/or in conjunction with each other, the aircrafts 1, satellite 8 and/or ground station 9 may keep and/or bring the at least one contrail formation parameter P out of at least one potential impact region of the contrail formation range indicative of a potential contrail impact to be avoided. The aircrafts 1, satellite 8 and/or ground station 9 may communicate with each other via respective communication channels c, for example, configured for digitally exchanging data for operating the control system 50.

Fig. 18 shows a schematic top view of an aircraft 1 comprising a control device 54 for monitoring and controlling properties a composition of exhausts E, further exhausts G and/or an exhausts mix M. The aircraft 1 further comprises a fuel storage system 52 for providing fuel B to at least one energy conversion arrangement 10 of the aircraft 1 configured to provide electrical power e to the aircraft 1, for example, to propulsion units 5 and/or an energy storage system 53, such a battery, thereof. The control device 54 for controlling the operation of the vehicle 1, energy system 2, propulsion units 5, fuel conversion arrangement 10, and/or fuel conversion device 11 can be provided as a part of the vehicle 1 and/or can be at least partly integrated into the fuel conversion arrangement 10 itself. The control device 54 that can be connected to the vehicle 1, energy system 2, propulsion units 5, fuel conversion arrangement 10, and/or fuel conversion device 11 via respective communication lines 55, which can be provided as transmission lines 18 and/or data connections configured to transmit data, such as through the communication channels c, and/or electrical power e in any kind of wired and/or wireless manner.

The control device 54 can comprise a processing unit 56, an interface module 57, a storage module 58 and/or the control element 59 which can be connected to each other via the respective communication lines 55 which may be configured to transfer any kind of information, data, power and/or energy. The vehicle 1 and/or the energy conversion arrangement 2 can be provided with a computing device 60 that may comprise the control device 54 or vice versa. A control program 61, for example, in the form of a computer program, can be stored on a computer-readable data carrier 62 which may take the form of a computer-readable medium 63 and/or data carrier signal 64. The control device 54 may comprise the computing device 60, the computer program 61, the computer-readable data carrier 62, and/or any kind of control element as well as communication lines 55 for exchanging data between the respective above-mentioned components. Control elements 59 may be any kind of data source and/or sink, such as a measuring element, sensor 32, control unit 39, output device and/or actuator of the vehicle 1, the energy conversion arrangement 2 and/or the propulsion units 5 which may constitute a part of the control system 50 for controlling a certain function thereof, for example, by connecting to the control elements 59 through the interface module 54.

In the present example, the energy conversion arrangement 2 comprises a fuel conversion device 11 which may comprise and/or take the form of a fuel cell system 70, such as in any other embodiment of an energy system 2 described herein. The fuel conversion device 11 and respective fuel cell system 70 can be combined as the energy conversion arrangement 10 comprising the thermal management system 40, air supply system 41 and/or mixing assembly 42. The energy conversion arrangement 10 can be located within the hull 4 of the aircraft 1, for example, inside the fuselage 3 and/or nacelles of each of the propulsion units 5.

The aircraft 1 and/or energy system 2 may comprise multiple fuel cell systems 70 which may each comprise multiple fuel cell units 71 which may be used for generating electrical energy e for propulsion of the aircraft 1 and/or for powering auxiliary systems of the aircraft, such as an auxiliary power unit (APUs), and which may be stored in the energy storage system 53. The fuel cell system 70 may comprise and/or may be comprised of at least one fuel cell unit 71 containing multiple fuel cell elements 72 which may be a single fuel cell that can constitute a respective smallest controllable element of the fuel cell unit 71. The fuel cell units 71 may be provided, for example, in the form of fuel cell stacks. Each fuel cell unit 71 may comprise multiple fuel cell elements 72.

The fuel conversion device 11 may take up air A from the air supply system 41 and fuel B from the fuel storage system 52, and generates exhausts E, for example, relatively humid air, when converting the fuel B to electrical energy e in thermal energy under production of the exhaust E. The exhausts E from the fuel conversion device 11 and/or fuel cell system 70 can pass through the air supply system 41 which may comprise the compressing device 16, expansion device 17, heating device 30, and/or heat exchange device 34. Respective exhaust outlets 13 for the exhausts E may lead the exhausts E to the air supply system 41, the mixing assembly 42 and/or beyond hull 4.

In the mixing assembly 42, the exhausts E may be mixed with further exhausts G from the thermal management system 40 in a controlled manner to obtain an exhausts mix M of the exhaust the and the further exhausts G. The exhausts mix M may emitted through a respective exhaust outlet 13 of the mixing assembly 42 beyond the hull 4 of the aircraft. The thermal management system 40 can receive further air H from the atmosphere 7 and/or from inside the hull 4.

The further air H may be used in the thermal management system 40 to cool down a coolant K which is then supplied to the fuel conversion device 11 and/or the fuel cell system 70 in order to maintain a desired temperature level for efficient fuel conversion in the fuel conversion device 11 and/or fuel cell system 70. The coolant K may then be transported back to the thermal management system 40. The further air H can be warmed up by means of the coolant K from the fuel conversion device 11 to provide the further exhausts G.

Fig. 19 shows a schematic illustration of a further embodiment of an energy conversion arrangement provided 10 with at least one control valve 43 for admixing the exhausts E to the further exhausts G and/or for admixing the further exhausts G to the exhausts E. For example, the mixing assembly 42 may comprise at least one first control valve 43a configured for admixing the exhausts E of the fuel conversion device 11 to the further exhausts G of the of the energy conversion arrangement 10 and/or at least one second control valve 43b configured for admixing the further exhausts G of the of the energy conversion arrangement 10 to the exhausts E of the fuel conversion device 11. The at least one first control valve 43a can be arranged in a flow path 15 of the exhausts E of the fuel conversion device 11 downstream of an air supply system 41 of the energy conversion arrangement 10 and/or the at least one second control valve 43b is arranged in a flow path 15 of the further exhausts G downstream of as thermal management system 40 of the energy conversion arrangement 10.

The control valves 43 may be configured as switch valves 38 and can be operated with the help of respective control units 39 which may be connected to at least one of the sensors 32 via respective transmission line 18 for transmitting energy and/or information and can further be connected to the control device 54. The control valves 43 may each provide and/or be arranged at a flow junction 37 configured to branch-off and/or divert the exhausts E and/or the further exhausts G from their flow path 15 to an alternate auxiliary flow path 15, bypass duct, or alike. The amount of exhausts E and/or further exhausts G branched-off and/or diverted may be controlled by means of the control unit 39 and/or the control device 54 in order to keep any measurement value, such as a temperature value, a pressure value, and/or a humidity value, measured by means of at least one of the sensors 32 before, within, and/or after the expansion device 17 within, above, and/or below a respective desired or required value range and/or limit.

In the present example, the mixing assembly 42 comprises a mixing device 44 which can be arranged within the hull 4. The first control valve 43a can be arranged in the flow path 15 of the exhausts E after the air supply system 41. In order to be able to branch-off o and/or divert the exhausts E to the mixing device 44 before and/or when reaching the exhaust outlet 13. Alternatively, or additionally, the second control valve 43b may be provided in the flow path 15 of the further exhausts G after the thermal management system 40 in order to branch-off and/or divert the exhausts E before and/or when reaching the mixing device 44 and/or exhaust outlet 13 to be admixed to the exhausts E at a respective flow junction 37. Respective sensors 32 may be provided in the flow path 15 of the exhaust E before and/or after the respective flow junction 37 and/or control valve 43 in each case, as well as after the mixing assembly 44 and/or at any exhaust outlet 13.

Fig. 20 shows a schematic representation of possible steps of a method for the energy conversion arrangement 10. For example, in a first step, the at least one contrail formation parameter P may be monitored. If it is being assessed in the second step S2 that it is advisable and/or necessary to keep and/or bring the at least one contrail formation parameter P out of at least one potential impact region of the contrail formation range indicative of a potential contrail impact to be avoided, then, in a third step S3 the exhausts E can be admixed to the further exhausts G and/or in a fourth step S4, the further exhausts G may be admixed to the exhausts E. The mixing can be achieved by operating the first control valve 43a and/or the second control valve 43b to provide respective mixing ratios Q, such as a first mixing ratio Qₐ and/or a second mixing ratio Q_{b}, representing an amount of exhausts E admixed to the further exhausts G and/or an amount of further exhausts G admixed to the exhausts E, respectively.

The mixing ratios Q can be defined as a ratio having the amount of further exhausts G as a nominator and the amount of exhausts E as a denominator and can be kept zero, or at least essentially near zero, if the exhausts E of the fuel cell system 70 are out of the at least one potential impact region of the contrail formation range. Respective amounts of exhausts E admixed to the further exhausts G and/or an amount of further exhausts G admixed to the exhausts E can be held below a mixing threshold I which may indicate a limitation of the respective mixing ratios Q. In and/or after step S2, step S3, and/or step S4, it may be returned to step S1 in order to create a control loop for continuously monitoring the contrail formation parameter P in order to assess whether any of the mixing processes are necessary to keep and/or bring the at least one contrail formation parameter P out of at least one potential impact region of the contrail formation range indicative of a potential contrail impact to be avoided.

Alternatively, and/or additionally, in a fifth step S5 be assessed whether an output of energy e of the fuel cell system 70 should be increased, for example, in order to elevate a temperature value T of the exhausts E and/or the further exhausts G. In a sixth step S6, the fuel cell system 70 can be controlled such that its output of energy e should be increased to keep and/or bring the at least one contrail formation parameter P out of at least one potential impact region of the contrail formation range indicative of a potential contrail impact to be avoided. Alternatively, and/or additionally, in a seventh step S7, the fuel cell system 70 can be controlled such that the at least two fuel cell elements 72 are being operated each at a different current density to keep and/or bring the at least one contrail formation parameter P out of at least one potential impact region of the contrail formation range indicative of a potential contrail impact to be avoided.

Any of the steps S3, S4, S6 and S7 for mixing the exhausts E, G, and/or increasing an energy output of the fuel cell system 70, respectively, can be combined with each other as desired as or required for keeping asset or bringing the at least one contrail formation parameter P out of at least one potential impact region of the contrail formation range indicative of a potential contrail impact to be avoided. For example, can be decided in step S5 that, if a certain mixing threshold I is reached in steps S3 and/or S4, without reaching a desired effect on the at least one control formation parameter P, then alternatively, and/or additionally, steps S6 and/or S7 are or is, respectively, applied in order to provide respective additional energy e output and/or rise of the temperature value T and thus an increased heat flow and/or output to enhance the result of any of the respective mixing processes, for example, in order to reduce a relative humidity of the exhausts E, the further exhausts G, and/or the exhausts mix M.

The described method enables a control mechanism to either allow for a mixing of the TMS (further exhausts G exiting the TMS) and ASP (exhausts E exiting the ASP) outflows, i.e., and/or two separate outflows. This way, the mixing can be selectively conducted during contrail forming conditions. Hence, any thermodynamic losses caused by the mixing process occur only when necessary. The accurate prediction for contrail forming conditions can be carried out in each of the steps of the method, in particular, in step S1 when monitoring the at least one contrail formation parameter P. This can be achieved by sensors 32 and/or control elements 59 on the aircraft 1 and/or by information provided from external sources, such as other aircraft 1, satellites 8 and/or ground stations 9.

Alternatively, or additionally, steps S5, S6 and/or S7 allow for adding a controlled amount of heat to the exhausts, for example in the form of TMS outflow to the ASP outflow. This would allow to control the droplet formation in the ASP outflow. Adding heat reduces the relative humidity and hence delays the formation of droplets. Not adding heat promotes droplet formation. Depending on the outflow aerodynamics, an enhanced or delayed droplet formation reduces or increases the final droplet number and droplet size. This adds another degree of freedom and provides control of contrail properties.

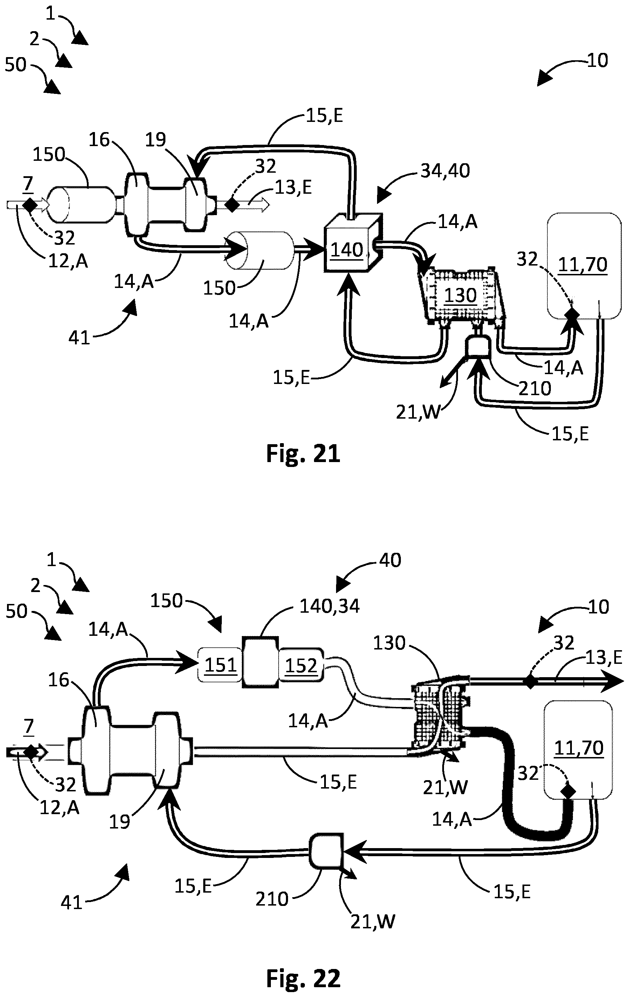

Fig. 21 shows a schematic illustration of an exemplary embodiment of an energy conversion arrangement 10 comprising a humidifying device 130 having at least one humidifying stage 131, 132 (see also Fig. 16). The energy conversion arrangement 10 may further comprise an intercooler assembly 140, and/or at least one filter device 150 which may have at least one particle filter element 151 and/or chemical filter element 152. Furthermore, the energy conversion arrangement 10 may comprise at least one water separator 210.

The humidifying device 130 is arranged in a flow path 14 of the supply air A and a flow path 15 the exhausts E. The humidifying device 130 is configured to humidify the supply air A with water W from the exhausts E. In the present example, the humidifying device 130 is arranged between the intercooler assembly 140 and the fuel conversion device 11, in particular, the fuel cell system 70, in the flow path 14 of the supply air A, and/or between the intercooler assembly 140 and the water separator 210 in the flow path 15 of the exhausts E, respectively.

The intercooler assembly 140 may comprise at least one heat exchange unit 34. In the present example, the intercooler assembly 140 may be arranged in the flow path 14 of the supply air A between the humidifying device 130 and the filter device 150, and/or the flow path 15 of the exhausts E between the humidifying device 130 and the air supply system 41, in particular the turbine 19 thereof. The at least one filter device 150 may be arranged in the flow path 14 of the supply air between the air inlet 12 and the air supply system 41, in particular the compressing device 16, thereof, and/or between the air supply system 41, in particular the compressing device 16, thereof, and the intercooler assembly 140, respectively.

Alternatively, or additionally, the humidifying device 130 can be used as a water separator. For example, the humidifying device 130 may have a separation structure comprising a permeable membrane and/or absorbent material. The permeable membrane may be provided in the form of an/or comprise a capillary assembly or pore arrangement which can be configured to maximise a separation surface provided by the permeable membrane. Therefore, the capillary assembly may comprise a number of capillary elements and/or pores forming guide channels for separating water W from the exhausts E. Due to respective small flow channels, the humidifying device 130 may filter tiny droplets from the flow, in particular, if it is placed downstream of the turbine 19. The tiny droplets may condense in the turbine 19 and can be difficult to separate otherwise from the exhausts E otherwise.

In operation, the exhausts E can enter the humidifying device 130 through an exhaust inlet and travel along the separation structure, for example through the capillary elements, thereof, such that water W contained in the exhausts E can fuse through the permeable membrane, why the remaining relatively dry exhausts E travel to a dry outlet of the humidifying device where they can be discharged from the humidifying device 130. The collected water W can be discharged through a wet outlet of the humidifying device 130 which can be connected to the water supply line 21 or piping (see Figs. 22 to 24).

In operation of the energy conversion arrangement 10, the supply air A can be sucked in through the air inlet 12 from the atmosphere 7 and/or from inside the hull 4, e.g., from a cabin of the aircraft 1. The supply air A may then pass the at least one filter device 150 in order to filter out any undesired particles and/or chemical components from the supply air A. Afterwards, the supply air A may pass the air supply system 41, in particular the compressing device 16, in order to be pressurised to a desired degree. The pressurised supply air A may then (again) pass the at least one filter device 150 in order to filter out any undesired particles and/or chemical components from the supply air A.

In the intercooler assembly 140, the supply air A may be cooled down through a corresponding heat exchange with the exhausts E. The relatively dry supply air A can then pass the humidifying device 130 in order to be humidified with water W from the exhausts E (liquid water and/or water vapour). For example, the supply air A and the exhausts E can at least section -wise be guided in a counterflow arrangement in the humidifying device 130. After the humidifying device 130, the supply air A can be supplied to the fuel conversion device 11, in particular the fuel cell system 70.

The exhausts E from the fuel conversion device 11, in particular the fuel system 70, can be led through the water separator 210, where water W can be separated from the exhausts E and can be led away through a respective water supply line 21, and/or piping. The exhausts E can then pass the humidifying device 130. Afterwards, the exhausts E can be led through the intercooler assembly 140 and then through the air supply system 41, in particular the turbine 19, thereof. For example, the exhausts E may be then led to the exhaust outlet 13 and/or to a missing assembly 42 or alike.

In the present example, sensors 32 can be provided at the air inlet 12, the exhaust outlet 13, for the flow path 14 of the supply air A entering the fuel conversion device 11, in particular the fuel cell system 70, and/or any location in between in order to be able to adjust a humidity of the supply air A and/or the exhausts E based on at least one measurement value to provide humidity control for the fuel conversion device 11, by means of the control device 54 of the control system 50. The humidifying device 130, the intercooler assembly 140, and/or the at least one filter device 150 may be regarded as a part of the thermal management system 40 and/or the air supply system 41, effectively. As such, any part of components of the humidifying device 130, the intercooler assembly 140, and/or the at least one filter device 150 can be used separately and/or in conjunction with any other configuration and/or exemplary embodiment of the energy conversion arrangement 10 described herein.

Fig. 22 shows a schematic illustration of another exemplary embodiment of an energy conversion arrangement 10 comprising a humidifying device 130. For the sake of brevity and efficiency, merely differences between the present exemplary embodiment of the energy conversion arrangement 10 and the embodiment shown in Fig. 21 will be explained in the following. For example, the humidifying device 130 may be operated such that the supply air A and the exhausts E are at least section-wise guided in a crossflow arrangement. The intercooler device 140 may be cooled as desired or required by further air H and/or the exhausts E leaving the humidifying device 130, and/or maybe integrated into the filter device 150 or vice versa.

For example, a particle filter element 151 may be arranged in the flow path 14 of the supply air A between the air supply system 41, in particular the compressing device 16, thereof, and the intercooler assembly 140, in particular, in order to remove unwanted particles from the supply air A. A chemical filter element 152 may be arranged in the flow path 14 of the supply air A between the intercooler assembly 140 and the humidifying device 130, in particular, in order to remove unwanted components from the supply air A. The intercooler device 140, particle filter element 151 and/or chemical filter element 152 can be arranged back-to-back with respect to each other.

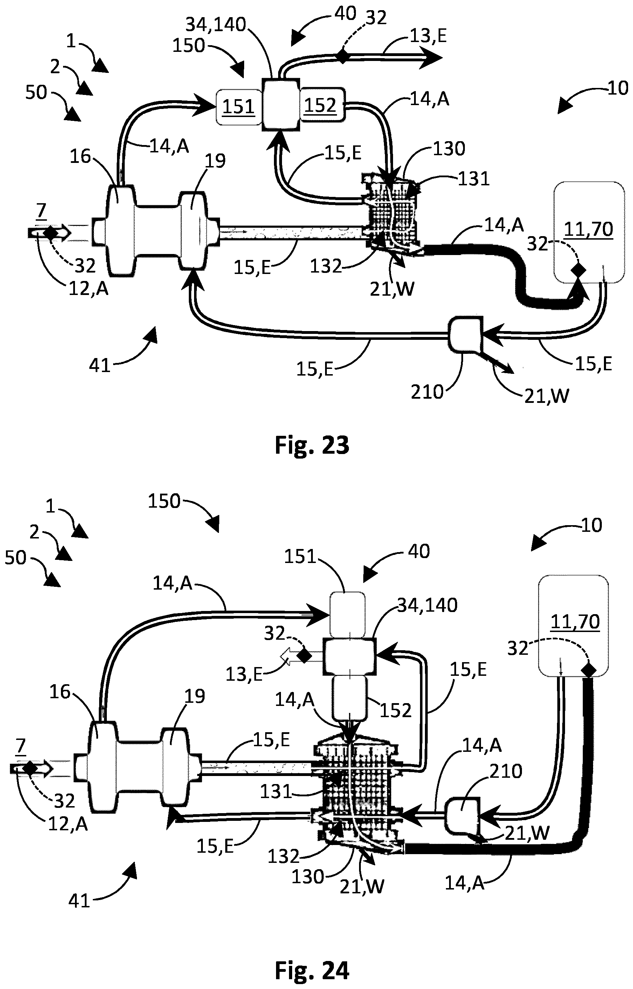

Fig. 23 shows a schematic illustration of a further exemplary embodiment of an energy conversion arrangement 10 comprising a humidifying device. For the sake of brevity and efficiency, merely differences between the present exemplary embodiment of the energy conversion arrangement 10 and the embodiments shown in Figs. 21 and 22 will be explained in the following. For example, the humidifying device 130 may be operated such that the supply air A and the exhausts E are at least section-wise guided in a counter-flow and/or crossflow arrangement. For such an arrangement, the two humidifying stages 131, 132 may be provided in the humidifying device 130.

For example, a first humidifying stage 131 and a second unifying stage 132 may be provided. In the first humidifying stage 131, the supply air A from the intercooler assembly 140 and/or the filter device 150 may be humidified by means of the exhausts the from the air supply system 41, in particular the turbine 19 thereof. In the second humidifying stage 132, the supply air from the first humidifying stage 131 may be humidified by means of the exhausts E from the fuel conversion device 11, in particular the fuel cell system 70, for example after leaving the water separator 210.

Fig. 24 shows a schematic illustration of another further exemplary embodiment of an energy conversion arrangement comprising a humidifying device. For the sake of brevity and efficiency, merely differences between the present exemplary embodiment of the energy conversion arrangement 10 and the embodiment shown in Figs. 21 to 23 will be explained in the following. For example, the first humidifying stage 131 and a second unifying stage 132 may be separated from each other in that the exhausts E leave the humidifying device 130 after the first humidifying stage 131 and are then being fed into the air supply system 41, in particular the turbine 19, thereof. After leaving the turbine 19, the exhausts E are led into the second humidifying stage 132. After the second humidifying stage 132, the exhaust E can be led through the intercooler assembly 140 and then towards the exhaust outlet 13.

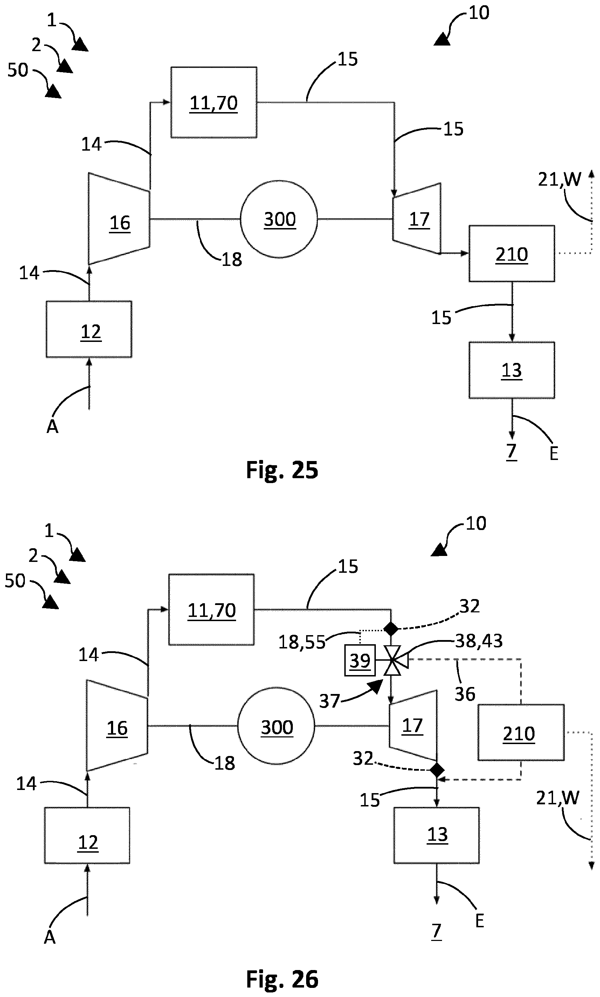

Fig. 25 shows a schematic illustration of an exemplary embodiment of an energy conversion arrangement 10 comprising a water separator 210 or water separation device. For the sake of brevity and efficiency, merely differences between the present exemplary embodiment of the energy conversion arrangement 10 and other embodiments thereof disclosed herein will be explained in the following. The arrangement 10 comprises at least one water separator 210 arranged in a flow path 15 of exhausts E produced in the fuel conversion device 11 and configured for separating water W from products of the fuel conversion device 11 on their way from the fuel conversion device 11 to the exhaust outlet 13.

The water W withdrawn from the exhausts E can be led through the respective water supply line 21 and/or piping. For example, the water W withdrawn from the exhaust E can be discharged through the water supply line 21 from the aircraft 1 and/or be led to the contrail reduction device 20. The materials separator 210 may partially or fully separate the gaseous or liquid water W which can then be drained. Drained water W, for example, in the form of large droplets, cannot contribute to contrail formation.

The water separating materials in the water separator 210 may cause a pressure loss which reduces the power potential of a turbine 19 as or as a part of the expansion device 17. Hence, the energy conversion arrangement 10 and any of the energy conversion arrangements described herein may comprise a motor 300, for example, an electric motor, or alike, which may be configured to compensate for any energetic losses incurred upstream of the water separator 210 by the water separation, in particular, in that the motor 300 may drive the compressing device 16 in addition to the expansion device 17, such as the turbine 19. The motor 300 can be arranged and/or adapted to transfer power onto the transmission line 18, which may at least in part be configured as a driveshaft driven by the motor 300.

Fig. 26 shows a schematic illustration of another exemplary embodiment of an energy conversion arrangement comprising a water separator 210. For the sake of brevity and efficiency, merely differences between the present exemplary embodiment of the energy conversion arrangement 10 and other embodiments thereof disclosed herein will be explained in the following. In the present example, the energy conversion arrangement 10 may comprise a bypass duct 36 connecting to the flow path 15 of the exhausts E via a flow junction 37, wherein the at least one water separator 210 is arranged in the bypass duct 36.

The flow junction 37 may comprise a switch valve 38 which, for example, may be operated in a stepless manner, to let the exhausts E through to the expansion device 17 and/or lead the exhausts E to the exhaust outlet 13 via the bypass duct 36. The switch valve 38 may be operated with the help of a control unit 39 which may be connected to at least one of the sensors 32 via respective transmission line 18 and/or communication line 55 for transmitting energy and/or information. Thus, operation of the switch valve 38 may be controlled by means of the control system 50, in particular the control device 54, to provide a control valve 43 for controlling an amount of exhausts E led through the bypass duct 36 to the water separator 210.

In operation of the energy conversion arrangement 10, the exhausts E may be branched off from the flow path 15 at the flow junction 37 to bypass the expansion device 17 through the bypass duct 36 leading to the water separator 210, thereby forming an alternate or auxiliary flow path 15 for the exhausts E in addition to the main flow path 15 of the exhausts E leading through the expansion device 17. The amount of exhausts E bypassing the expansion device 17 and led through the water separator may be controlled by means of the control unit 39 and/or the control system 50, in particular the control device 54, in order to keep any measurement value, such as a temperature value, a pressure value, and/or a humidity value, measured by means of at least one of the sensors 32 before, within, and/or after the expansion device 17 within, above, and/or below a respective desired or required value range and/or limit.

Alternatively, or additionally, the flow junction 37 may be arranged within the expansion device 17, for example, between certain sections thereof. The flow path 15 leading through the expansion device 17 and the flow path 15 leading through the bypass duct 36 may be joined within and/or after the expansion device 17 and/or the exhaust outlet 13. The bypass duct 36 may be used to bypass any section or component of the energy conversion arrangement 10 as described herein. Therefore, at least one flow junction 38 may be arranged as desired or required for bypassing the expansion device 17, the contrail reduction device 20, the heating device 30, and/or the heat exchange device 34.

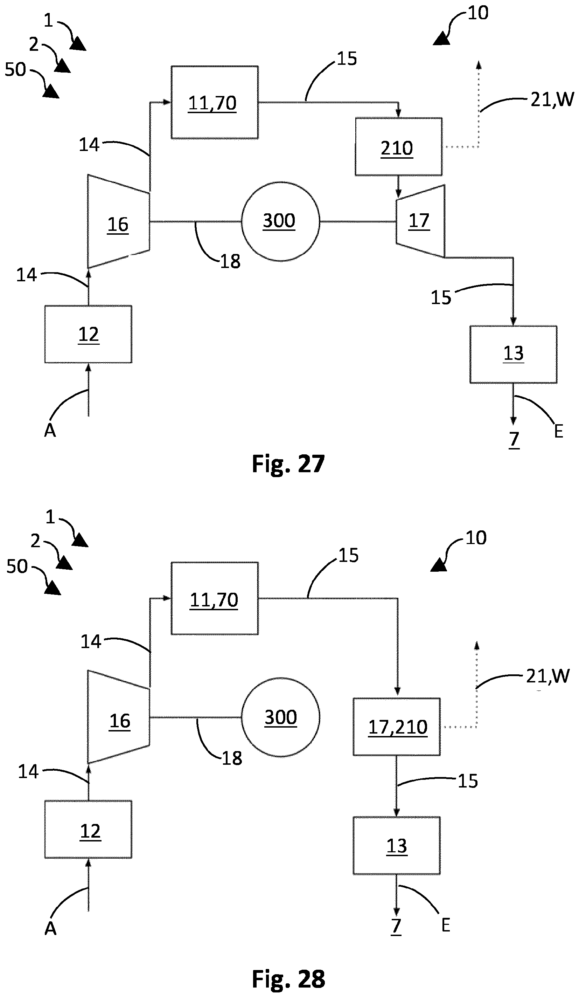

Fig. 27 shows a schematic illustration of a further exemplary embodiment of an energy conversion arrangement 10 comprising a water separator 210. For the sake of brevity and efficiency, merely differences between the present exemplary embodiment of the energy conversion arrangement 10 and other embodiments thereof disclosed herein will be explained in the following. In the present example, the water separator 210 is arranged upstream of the expansion device 17, in particularly the turbine 19. Thereby, relative humidity of the exhausts E entering the expansion device 17, in particular turbine 19, may be reduced to such a degree, that condensation of water W in the expansion device, in particular turbine 19, may be avoided.

Fig. 28 shows a schematic illustration of another further exemplary embodiment of an energy conversion arrangement 10 comprising a water separator 210. For the sake of brevity and efficiency, merely differences between the present exemplary embodiment of the energy conversion arrangement 10 and other embodiments thereof disclosed herein will be explained in the following. In the present example, the water separator 210 is arranged in the flow path 15 of the exhausts E instead of and/or as the expansion device 17. For example, the pressure drop in the exhausts E within the water separator 210 may be utilised to foster the separation process.

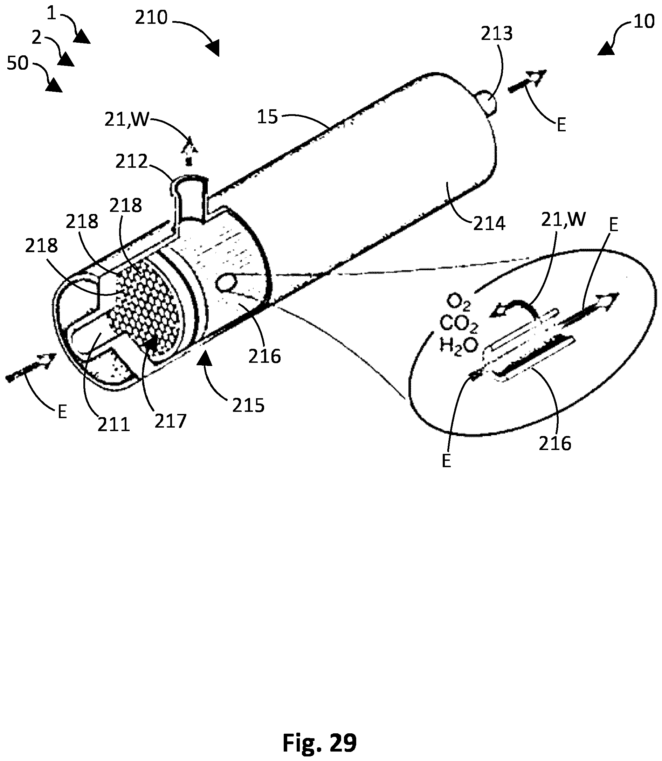

Fig. 29 shows a schematic perspective semi-transparent view of a water separator 210 (see Bocciardo, Davide, "Optimisation and integration of membrane processes in coal-fired power plants with carbon capture and storage", 2015, https://www.researchgate.net/publication/292788149 _ Optim isation_and_integra tion of membrane_processes_in coal-fired_power_plants_with_carbon_capture_and_storage). The at least one water separator 210 may have at least one exhaust inlet 211, at least one wet outlet 212, and/or at least one dry outlet 213, which, for example, may be provided at an enclosure 214, such as a housing or piping of the water separator 210.

The enclosure 214 may at least partly provide the flow path 15 for the exhausts E and comprises a separation structure 215 extending along the flow path 15 for the exhausts E provided by the water separator 210. For example, the separation structure 215 comprises a permeable membrane 216 and/or absorbent material. The permeable membrane 216 may be provided in the form of an/or comprise a capillary assembly 217 or pore arrangement which can be configured to maximise a separation surface provided by the permeable membrane 216. Therefore, the capillary assembly 217 may comprise a number of capillary elements 218 and/or pores forming guide channels for separating water W from the exhausts E.

In operation, the exhausts E can enter the water separator 210 through the exhaust inlet 211 and are travelling along the separation structure 217, for example through the capillary elements 218, thereof, such that water W contained in the exhausts E can fuse through the permeable membrane 216, why the remaining relatively dry exhausts E travel to the dry outlet 213 where they can be discharged from the water separator 210. The collected water W can be discharged through the wet outlet 212 which can be connected to the water supply line 21 or piping.

For example, the water separator 210 containing the water separating materials can be placed at any location of the energy conversion arrangement 10 where the flow of exhausts E has the highest or at least a relatively high content of liquid water and/or water vapor. This supports the separation processes. Further, the separating materials making up the separation structure 215 do not have to be concentrated in one single water separation component, such as the water separator 210. They can also be incorporated in the pipe walls and all other component surfaces of the energy conversion arrangement 10 which are in contact to a relatively humid flow of exhausts E. An important, if not the most important factor for the effectiveness of the used material can be seen in the respective water flux per surface area of the permeable membrane to 16. The available surface area should be maximized, for example by filling the volume of the flow path with hollow fibres, capillary tubes, narrow tubes, or alike, which can be arranged as a respective capillary assembly 217.

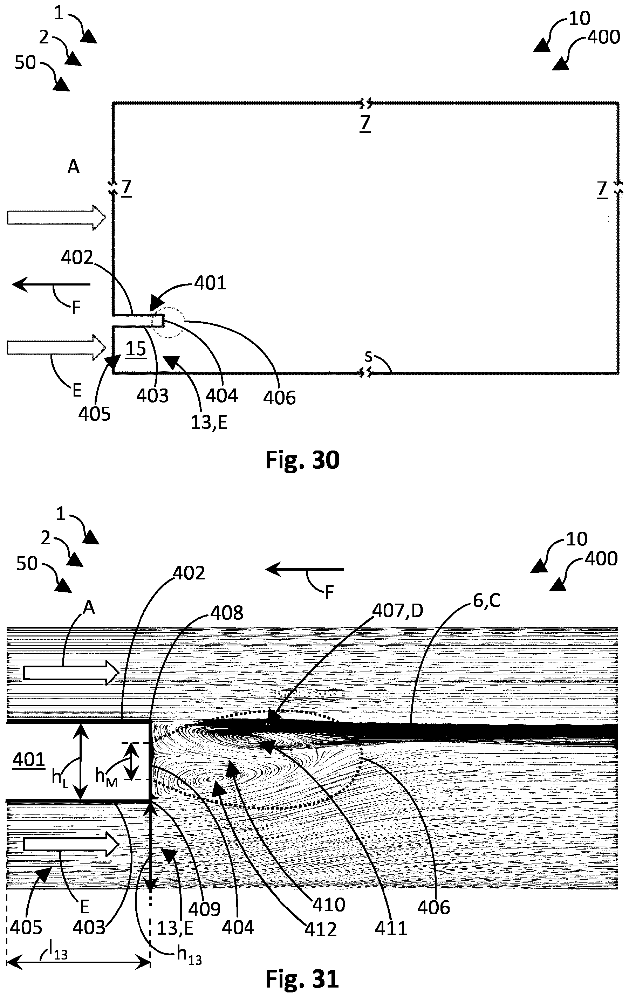

Fig. 30 shows a schematic illustration of a model for an embodiment of an exhaust assembly 400 of an energy conversion arrangement 10. The exhaust assembly 400 can comprise a wall portion 401 which can provide an outer wall section 402 and an inner wall section 403. A lip 404 can be arranged between the outer wall section 402 and the inner wall section 403.

The inner wall section 403 may at least partly define a flow path 15 for the exhausts E, in particular an outlet passage 405 thereof, leading to an exhaust outlet 13 for letting out the exhausts E into the atmosphere 7 which can be regarded as bordering the mixing assembly 400. The mixing assembly 400, in particular the outlet passage 405 is illustrated as having an optional symmetry plane s. Asymmetric configurations of the mixing assembly 400 can be implemented as desired or required. A mixing zone 406 is formed in the vicinity and/or around the lip 404 at the exhaust outlet 13.

Fig. 31 shows a schematic illustration of a model of the mixing zone 406 created by an embodiment of an exhaust assembly 400 as illustrated in Fig. 30. In operation of the aircraft 1, a droplet source 407 of relatively large droplets C formed of water vapour contained in the exhausts E may be established in the mixing zone 406 under certain operating and/or atmospheric conditions. Formation of the droplets C can be fostered by providing trailing edges, for example, an outer trailing edge 408 between the outer wall section 402 and the lip 404 for the flow of ambient air A resulting from a certain flight speed in the travel direction F, and/or an inner trailing edge 409 between the inner wall section 403 and the lip 404 for the flow of exhausts E, which may help to create a recirculation region 410 in the mixing zone 406.

The recirculation region 410 may comprise an air vortex 411 at least partly driven by ambient air A and/or an exhaust vortex 412 of exhausts E at least partly driven by the exhausts E. The outer trailing edge 408 and/or the inner trailing edge 409 promotes formation of the air vortex 411 and/or the exhaust vortex 412, respectively. Between the air vortex 411 and the exhaust vortex 412 the recirculation region 410 can build, where respective streams of ambient air A exhausts E, and/or a mix thereof at least in parts are reversed and thus may flow essentially in parallel to the travel direction F. In other words, the recirculation region 410 can comprise and/or can be comprised of the air vortex 411 and/or the exhaust vortex 412. Thus, in the recirculation region 410, the ambient air A can gradually mix with the exhausts E to promote formation of relatively large droplets C which may create the plume 6.

A mixing height h_{M} of the mixing zone 406 can depend on a lip height h_{L} of the lip 404, an outlet height h₁₃, of the outlet 13, and/or of an outlet length l₁₃ of the outlet passage 405. For example, a ratio of the lip height h_{L} to the outlet height h₁₃ may exceed a value of 0.05, preferably 0.06, most preferably 0.07. An effective mixing height which may be represented by a minimum mixing height h_{M} of the mixing zone 406 at the lip 404 may amount to 3 to 7 mm, preferably 4 to 6 mm, most preferably around 5 mm. The outlet length l₁₃ may amount to at least between 80 to 120 mm, preferably at least between 90 to 110 mm, most preferably around 100 mm.

According to the present example it is illustrated how in a contact point where the warm and moist flow exhaust flow coming from the fuel conversion device 11 meets the cold and dry air A from the atmosphere 7, the droplet source 407 evolves, where homogeneous nucleation occurs and droplets C, D are being formed. It can be observed how a part of this source of droplet source 407 falls into the recirculation region 410 that is represented by respective vortex lines. A prolonged residence time of the droplets D in this area leads them to grow further, which is beneficial to reduce the overall number of droplets by creating relatively large and/or coagulated droplets C which can form mainly through additional condensation and possibly also partly through coagulation if average distances between neighbouring droplets are sufficiently small.

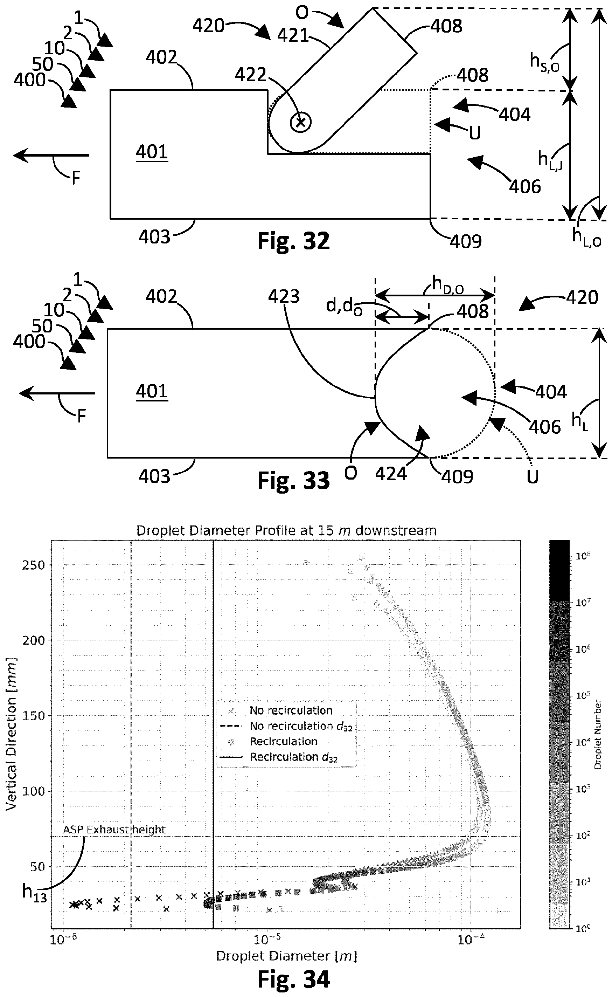

Fig. 32 shows a schematic illustration of an embodiment of an exhaust assembly 400 comprising a spoiler device 420 which may at least in part provide the outer trailing edge 408. The spoiler device 420 may comprise a spoiler element 421 which can be configured to be movable between a stowed position U and a deployed position O with a respective variable spoiler height hs, which may be adjusted by means of the control system 50 and respective actuators (not shown) as described above in order to avoid contrail formation or at least minimise unwanted contrail impacts. For example, the spoiler element 421 can be provided with a hinge axis 422 enabling to rotatably move the spoiler element 421 between the stowed position U and the deployed position O in the manner of spoiler flap, or alike.

In the stowed position U, the spoiler height hₛ may be essentially zero, thus not adding to the lip height hs,u in the stowed position U which can therefore be regarded as a minimal lip height h_{L,MIN}. In the deployed position O, the spoiler height hs,o may add to the minimal lip height to provide a lip 404 with a maximum lip or open lip height h_{L,O}. The outer trailing edge 408 is thus elevated and/or moved away from the lower trailing edge 409 to widen and/or open up the mixing zone 406.

Fig. 33 shows a schematic illustration of another embodiment of an exhaust assembly 400 comprising a spoiler device 420. The spoiler device 420 may comprise a lip section 423 which can at least sectionwise be shaped such that the cavity 424 with a cavity depth d is provided. The cavity 424 can enhance a formation of the outer trailing edge 408 and/or the inner trailing edge 409, and thus of mixing zone 406. For example, the lip section 423 may be shaped such that it at least in part concavely extends between the outer trailing edge 408 and the inner trailing edge 409.

The lip section 423 can be configured to be at least section-wise movable between a stowed position U and a deployed position O with a respective variable spoiler height h_{D}, which may be adjusted by means of the control system 50 and respective actuators (not shown) as described above in order to avoid contrail formation or at least minimise unwanted contrail impacts. A maximal spoiler height h_{D,O} in the deployed position O may lead to a corresponding deployed depths do of the lip section 423 and thus of the cavity 424 formed thereby. For example, in the stowed position U, the lip section 423 may provide a convex profile potentially unifying the trailing edges for 408, 409 in order to provide a single trailing edge for reduced drag and preferably laminar flows adhering to the wall portion 401. In the deployed position O, the lip section 423 may be detracted to form the cavity 424 and built the mixing zone 406 with the mixing effects between air A and exhausts E as described above.

According to the present exemplary embodiments, the spoiler device 420 can be any component or arrangement involving an active or passive spoiler element 421, lip section 423 and/or cavity 424 allowing and/or enhancing formation of the mixing zone 404. The spoiler device 420 can help to spoil and/or deflect a flow of the ambient air A and/or of the exhausts E. In particular, the spoiler device 420 can promote a respective flow stall leading to the creation of the mixing zone 404, possibly under formation of the air vortex 411 and/or the exhaust vortex 412.

Fig. 34 shows a schematic diagram of droplet formation parameters provided according to embodiments of an exhaust assembly 400. The respective exhaust height h₁₃ of the exhaust outlet 13 illustrated by a horizontal dashed and dotted line amounts to 70 mm in the present example. A normalized droplet diameter profile downstream the plume 6 is represented by a corresponding scale, such as a grayscale, that represents the number of droplets C, D of classified by their respective sizes, i.e. diameters. It should be noted that, after the implementation of the recirculation zone 410, the numerous small droplets D in the lower left corner of the plot are not present, since they have grown larger. Hence, the average Sauter mean diameter d₃₂, depicted in Fig. 34 by a respective dashed vertical line for an exemplary case without a mixing zone 406, and by a respective solid vertical line for an exemplary case involving a mixing zone 406.

The proposed application of the exhaust assembly 400 thus shifts the droplet spectrum towards bigger sized droplets C with a reduction of their overall number. This effect is successfully proven by means of Computational Fluid Dynamics (CFD) simulations applied in a simulated flow domain modelled in line with the embodiment of the exhaust assembly as illustrated in Fig. 30. In the simulated domain, a rectangular overall shape is assumed bordered by the atmosphere 7 and the symmetry plane s, with a small rectangular dent on its bottom left side that represents the wall portion 401 between the external ambient air A and the exhausts E in the exemplary form of an internal flow coming from the air supply system 41.

From bottom left to upper left, there are two inlets to the simulated domain, namely the cold, dry flow of air A from the atmosphere 7 and the warm and moist flow of exhausts E. The wall portion is assumed to be a non-slip wall. The top farfield boundary is set sufficiently far away from the main flow phenomena to ensure it does not influence the simulation results. The bottom boundary condition is the symmetry plane s, The right boundary condition is the outlet of the domain, also sufficiently far away to ensure the non-disturbance of the flow.

The resulting simulated flows are illustrated in Fig. 31. Applied boundary conditions for the simulation are as follows:
- Ambient air A:
   - Static temperature: 228 K
   - Static pressure: 37601 Pa
   - Water vapor mass fraction: 0.0
   - Mach 0.5
- Exhausts E and/or exhaust mix M:
   - Total temperature: 320 K
   - Total pressure: 38300 Pa
   - Water vapor mass fraction: 0.191

Furthermore, for the simulation, the variable lip height h_{L} is set to values between 1 mm and 5 mm for the non-recirculation and recirculation cases, respectively. The outlet lengths l₁₃ is set to 70 mm. Resulting values for droplet formation parameters of the simulation illustrated in Fig. 34 are generated at the outlet of the simulated domain at a distance of approx. 15 m away from the respective exemplary embodiment of the exhaust assembly 400.

Possible implementations of the proposed exhaust assembly can be categorised as passive flow control devices or active control flow devices, for example, by respective implementations of the spoiler device 420. Any passive flow control devices are relatively easy to implement and should not significantly add significant complexity/weight to the system. A thickness increase at the end of the wall portion 401 can be seen as a passive measure. Alternatively, or additionally, a vortex plate, such as a fixed spoiler element 421 can be arranged at the end of the wall portion 401. Moreover, a bluff end of the wall portion 401, and/or cavities 424 that promote formation of the recirculation region 410 may be implemented.

Active flow control devices allow to optionally enable/disable the exhaust assembly 400 as required, by means of the control system 50 and respective actuators (not shown) as described above in order to avoid contrail formation or at least minimise unwanted contrail impacts, while increasing overall efficiency of the aircraft 1. For example, flap-like devices, such as the described spoiler element 421, can be located at the wall portion 401 and can be set to either a mixing and/or recirculation configuration in the deployed position O, or to a drag reduction configuration in the stowed position U, when the application of the mixing zone 406 is not necessary. Furthermore, a flow injection to promote formation of a mixing zone 406 and/or recirculation zone 410 is conceivable.

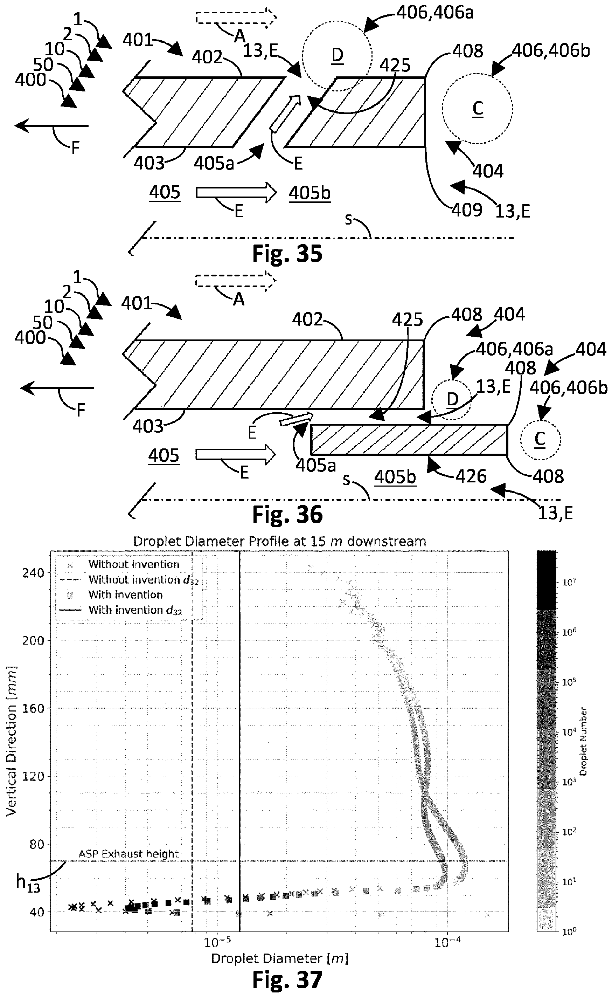

Fig. 35 shows a schematic illustration of an embodiment of an exhaust assembly 400 configured for creating a mixing zone 406 comprising a pre-mixing zone 406a and a main mixing zone 406b. A relatively small amount of exhausts E may be branched-off, split-off or separated through a tapping passage 405a or pre-passage leading away from the outlet passage 405 to a further exhaust outlet 13, while the main flow of exhausts E can be led though a main passage 406b which can be provided by as a continuation of the outlet passage 405. The respective branched-off flow of exhausts E can be led through a side channel 425 which can at least in part provided by the tapping passage 405a.

The branched-off flow of exhaust E can create the pre-mixing zone 406a at the further exhaust outlet 13 of the tapping passage 405a and/or the side channel. Such an at least one further exhaust outlet 13 can be located in the outer wall section 402. At the at least one further exhaust outlet 13, the pre-mixing zone 406a can be created preferably upstream of the main mixing zone 406b being in the travel direction F.

Any relatively small droplets D formed in the pre-mixing zone 406a can travel to the main mixing zone 406b. In the main mixing zone 406b, the relatively large droplets C can be formed from the relatively small droplets D by additional condensation of water vapour from the exhausts E entering the main mixing zone 406 from the main passage 405b through the respective exhaust outlet 13, for example, under the formation of the vortexes as described above. Under many circumstances, further droplets can form in the main mixing zone 406b. However, a number of additional droplets forming in the main mixing 406b zone can be significantly smaller than without the implementation of the pre-mixing zone 406a.

Fig. 36 shows a schematic illustration of a further embodiment of an exhaust assembly 400 configured for creating a mixing zone 406 comprising a pre-mixing zone 406a and a main mixing zone 406b. Here it is illustrated that the tapping passage 405a can be formed between a sleeve 426 and the wall portion 401, in particular the inner wall section 403 thereof. This sleeve 426 can be provided in the form of a bushing-like insert which may form a kind of nozzle providing the main passage 405b and which can protrude from the wall portion 401 in a direction extending opposite to the travel direction F.

The respective tapping passage 405a and/or site channel 425 can lead to a further exhaust outlet 13 at the end of which the pre-mixing zone 406a can be created. At the end of the main passage 405b, again the main mixing zone 406b can be created. In that the sleeve 426 can protrude from the outlet passage 405, stepped lip 404 or at least two lips 404 for potential vortex generation can be formed. Consequently, a respective number of stepped inner and outer trailing edges 408, 409 can be provided at both lips, for example, at the respective edges of the wall portion 401 and this sleeve 426.

Fig. 37 shows a schematic diagram of droplet formation parameters provided according to embodiments of an exhaust assembly 400 configured for creating a mixing zone 406 comprising a pre-mixing zone 406a and a main mixing zone 406b. The respective exhaust height h₁₃ of the exhaust outlet 13 illustrated by a horizontal dashed and dotted line amounts to 70 mm in the present example. According to the illustrated CFD results, a normalized droplet diameter profile downstream the plume 6 in a grayscale represents the number of droplets of that respective size. It should be noted that, after the implementation of the presented solution, the numerous small droplets in the lower left corner of the plot are not present. This is because of the introduction of droplets from the pre-mixing zone to the main mixing zone. Hence, the average Sauter mean diameter d₃₂, depicted in Fig. 37 by a respective dashed vertical line for an exemplary case without a premixing zone 406a, and by a respective solid vertical line for an exemplary case involving a pre-mixing zone 406a, significantly increases, which is beneficial.

The presented embodiments of the mixing assembly 400 enable to introduce the pre-mixing zone 406a where a small portion of the internal warm, moist flow of exhausts E mixes with the cold and dry ambient air. This leads to the formation of relatively small droplets D after the pre-mixing zone. These droplets are then transported into the main mixing zone 406b where the large remaining portion of the internal warm, moist flow mixes with the cold and dry ambient air A. There, the earlier formed droplets D provide a phase boundary on which condensation will take place. The condensation and the associated release of latent heat reduces the subcooling of the water vapor. Hence, the nucleation rate of new droplets in the main mixing zone 406b is much smaller than without the pre-mixing zone 406a.

Overall, the resulting droplet spectrum consists of fewer, larger droplets. This can help to reduce unwanted contrail impacts as required according to respective flight conditions. A capacity of the tapping passage 405a, main passage 405b, and/or side channel 425 for leading exhaust to the pre-mixing zone 406a can be adjusted and/ or controlled by means of the control system 50, in particular the control device 54, for example, by means of a control valve (not shown) for controlling an amount of exhausts E led through the tapping passage 405a, main passage 405b, and/or side channel 425.

While at least one example embodiment of the invention(s) is disclosed herein, it should be understood that modifications, substitutions and alternatives may be apparent to one of ordinary skill in the art and can be made without departing from the scope of this disclosure. This disclosure is intended to cover any adaptations or variations of the example embodiment(s). In addition, in this disclosure, the terms "comprise" or "comprising" do not exclude other elements or steps, the terms "a", "an" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### List of Reference Signs

- 1: aircraft
- 2: energy system
- 3: fuselage
- 4: hull
- 5: propulsion unit
- 6: plume
- 7: atmosphere
- 8: satellite
- 9: ground station / control station
- 10: energy conversion arrangement
- 11: fuel conversion device
- 12: air inlet
- 13: exhaust outlet
- 14: flow path (air)
- 15: flow path (exhausts)
- 16: compressing device
- 17: expansion device
- 18: transmission line
- 19: turbine

- 20: contrail reduction device
- 21: water supply line / piping
- 22: pump
- 23: spray nozzle
- 25: air duct

- 30: heating device
- 31: catalytic converter
- 32: sensor
- 33: combustion chamber
- 34: heat exchange device
- 35: electric heating element
- 36: bypass duct
- 37: flow junction
- 38: switch valve / discharge valve
- 39: control unit

- 40: thermal management system
- 41: air supply system
- 42: mixing assembly
- 43: control valve / switch valve
- 43a: first control valve
- 43b: second control valve
- 44: mixing device
- 45: heat exchanger unit / element

- 50: control system
- 51: computing system
- 52: fuel storage system
- 53: energy storage system / power storage / battery
- 54: control device
- 55: transmission line / communication line / data connection
- 56: processing unit
- 57: interface module
- 58: storage module
- 59: control element
- 60: computing device
- 61: control program / computer program
- 62: computer-readable data carrier
- 63: computer-readable medium
- 64: data carrier signal

- 70: fuel cell system
- 71: fuel cell unit
- 72: fuel cell element

- 130: humidifying device
- 131: first humidifying stage
- 132: second humidifying stage

- 140: intercooler assembly

- 150: filter device
- 151: particle filter element
- 152: chemical filter element

- 210: water separator
- 211: exhaust inlet
- 212: wet outlet
- 213: dry outlet
- 214: enclosure / housing
- 215: separation structure
- 216: permeable membrane
- 217: capillary assembly / pore arrangement
- 218: capillary elements / pores

- 300: Motor

- 400: exhaust assembly
- 401: wall portion
- 402: outer wall section
- 403: inner wall section
- 404: lip
- 405: outlet passage
- 405a: tapping passage / pre-passage
- 405b: main passage
- 406: mixing zone
- 406a: pre-mixing zone
- 406b: main mixing zone
- 407: droplets source
- 408: outer trailing edge
- 409: inner trailing edge
- 410: recirculation region
- 411: air vortex
- 412: exhaust vortex
- 420: spoiler device
- 421: spoiler element
- 422: hinge axis
- 423: lip section
- 424: cavity
- 425: side channel
- 426: sleeve

- I: warm, dry flow
- II: two exhausts mixing
- III: humid exhaust air
- IV: ambient air

- d: diameter
- c: communication channels
- d: cavity depth
- do: deployed depths
- e: energy
- g: ground
- h₁₃: outlet height
- h_{D}: spoiler depth
- h_{L}: lip height
- h_{M}: mixing height
- h_{S}: spoiler height
- l₁₃: outlet length
- s: symmetry plane

- A: air
- B: fuel
- C: Coagulated droplet
- D: Droplet
- E: exhausts
- F: travel direction
- G: further exhausts
- H: further air
- I: mixing threshold
- K: coolant
- M: exhausts mix
- O: deployed position
- P: contrail formation parameter
- Q: mixing ratio
- R: mixing with contrail reduction / mixing ratio
- S: mixing without reduction
- T: temperature value
- U: stowed position
- V: saturation pressure
- W: water
- X: saturation line
- Y: mixing line
- Z: mixing line

- S1: monitor parameter
- S2: assess contrail formation parameter / determine mixing ratio
- S3: adjust first mixing ratio
- S4: adjust second mixing ratio
- S5: assess contrail formation parameter / determine energy output
- S6: increase output
- S7: create imbalance

## Claims

1. Energy conversion arrangement (10) for an aircraft (1), comprising at least one exhaust outlet (13) for letting out exhausts (E) produced by a fuel
conversion device (11), in particular a fuel cell system (70), for converting at least one fuel to electrical and/or mechanical energy in the fuel conversion device (11); and
at least one exhaust assembly (400) configured to admix a stream of the exhausts (E) from the at least one exhaust outlet (13) with ambient air (A) from the ambient surroundings (7) in at least one mixing zone (406) to promote a growth of water droplets through at least partly condensing water vapor contained in the exhausts (E) in the mixing zone (406).

2. Energy conversion arrangement (10) according to claim 1, wherein the mixing zone (406) is configured to gradually admix the exhausts (E) to the ambient air (A).

3. Energy conversion arrangement (10) according to claim 1 or 2, wherein the mixing zone (406) comprises a pre-mixing zone (406a) and a main mixing zone (406b), and wherein at least one exhaust tapping passage (405a) of the exhaust assembly (400) leads a branched-off flow of exhausts (E) to a pre-mixing zone (406a) and a main passage (405b) of the exhaust arrangement (10) leads a main flow of exhausts (E) to the main mixing zone (406b).

4. Energy conversion arrangement (10) according to claim 3, wherein the tapping passage (405a) is formed as a side channel (425) within a wall portion (401) of the exhaust assembly (400) at least sectionwise separating the exhausts (E) from the ambient air (A) and/or between a sleeve (426) and an inner wall section (403) of the main passage (405a).

5. Energy conversion arrangement (10) according to at least one of claims 1 to 4, wherein the exhaust assembly (400) is configured to promote formation of an exhaust vortex (412) of exhausts (E) recirculating in the mixing zone (406).

6. Energy conversion arrangement (10) according to at least one of claims 1 to 5, wherein the exhaust assembly (400) is configured to promote formation of an air vortex (411) of ambient air (A) recirculating in the mixing zone (406).

7. Energy conversion arrangement (10) according to claims 5 and 6, wherein the exhaust vortex (412) and the air vortex (411) contact each other in a recirculation region (410) of the mixing zone (406).

8. Energy conversion arrangement (10) according to at least one of claims 1 to 7, wherein the exhaust assembly (400) comprises a lip (404) providing at least one trailing edge configured to create the mixing zone (406).

9. Energy conversion arrangement (10) according to claim 8, wherein a ratio of a lip height (h_{L}) of the lip (404) to an outlet height (h₁₃) of the exhaust outlet (13) exceeds a value of 0.05, preferably 0.06, most preferably 0.07.

10. Energy conversion arrangement (10) according to claim 8 or 9 wherein the exhaust assembly (400) comprises a spoiler device (420) configured to at least partly provide the lip (404).

11. Energy conversion arrangement (10) according to at least one of claims 1 to 10, wherein the exhaust assembly (400) comprises a concave lip section (423) providing a cavity (424) at least partly providing the mixing zone (406).

12. Energy conversion arrangement (10) according to at least one of claims 1 to 11, wherein an outlet passage (405) leading to the exhaust outlet (13) is configured to provide an outflow direction extending essentially in parallel or at least under an acute angle with respect to a flow direction of ambient air.

13. Energy system (2), in particular for powering a propulsion unit (5) for propelling an aircraft (1), comprising an energy conversion arrangement according to at least one of claims 1 to 12.

14. Propulsion unit (5) for propelling an aircraft (1), comprising an energy conversion arrangement (10) according to at least one of claims 1 to 12 and/or an energy system according to claim 13.

15. Aircraft (1) comprising an energy conversion arrangement (10) according to at least one of claims 1 to 12, an energy system (2) according to claim 13, and/or a propulsion unit (5) according to claim 14.
